# FASCICULE DE BREVET EUROPEEN

(11) **EP 3 967 531 B1**
(45) Date de publication et mention de la délivrance du brevet: **07.02.2024**
(21) Numéro de dépôt: 20205282.5
(22) Date de dépôt: 02.11.2020
(51) Int. Cl.: B60J 1/16

(54) **DISPOSITIF D'OBTURATION D'UNE BAIE MÉNAGÉE DANS LA CARROSSERIE D'UN VÉHICULE, ET VÉHICULE CORRESPONDANT**
VORRICHTUNG ZUR ABDICHTUNG EINES IN DIE KAROSSERIE EINES FAHRZEUGS EINGELASSENEN ÖFFNUNGSFELDS, UND ENTSPRECHENDES FAHRZEUG
DEVICE FOR SEALING AN OPENING MADE IN THE BODY OF A VEHICLE, AND CORRESPONDING VEHICLE

(30) Priorité: 11.09.2020 EP 20195748
(43) Date de publication de la demande: 16.03.2022
(73) Titulaire: Advanced Comfort Systems France SAS - ACS France, 79302 Bressuire (FR)
(72) Inventeur: GIRET, Frédéric, 79300 Bressuire (FR); GUILLOTEAU, Sébastien, 79350 Faye l'Abbesse (FR); NEE, Maxime, 44470 Carquefou (FR); CHARGE, Philippe, 79300 Bressuire (FR)
(74) Mandataire: Vidon Brevets & Stratégie

(56) Documents cités:
- EP-A1- 2 098 395
- WO-A2-2010/146185
- DE-A1-102006 035 632
- FR-A1- 2 833 212

## Description

### Domaine de l'invention

Le domaine de l'invention est celui de l'équipement des baies, utilisées notamment dans les véhicules automobiles.

Plus précisément, l'invention concerne les dispositifs d'obturation d'une baie ménagée dans un élément de structure, par exemple dans la carrosserie d'un véhicule, ou dans une portière du véhicule, et comprenant une partie mobile coulissante susceptible de libérer ou de fermer une ouverture en offrant un aspect affleurant, vu de l'extérieur.

L'invention peut également équiper d'autres types de structures, tels que les caravanes, les camping-cars, les cars et bus, les minibus, les camions, les camionnettes, les bateaux, etc.

De tels dispositifs, développés depuis plusieurs années par le titulaire de la présente demande, sont notamment connus sous le terme "baie flush".

En d'autres termes, ces dispositifs sont conçus de façon à présenter, vu de l'extérieur, un aspect affleurant ou quasi-affleurant entre la carrosserie, ou plus généralement la paroi ou la structure, et le panneau fixe du dispositif.

### Art antérieur

Le principe de cette technique est notamment décrit dans les documents EP 0 778 168 B1, EP0 857 844 B1 et WO 2010/146185 A2.

Le dispositif d'obturation (appelé par la suite "baie flush") présenté dans ces documents comprend une partie fixe et une partie mobile par rapport à cette partie fixe, ou panneau coulissant.

La partie mobile est reliée à l'ensemble fixe par des éléments fonctionnels qui assurent la mobilité requise et qui sont rapportés sur la face de la partie fixe tournée vers l'intérieur du véhicule.

Ces éléments fonctionnels, ou rails, assurent une fonction de guidage et de maintien du panneau mobile.

Ils sont placés sur la face orientée vers l'intérieur du véhicule, de façon suffisamment éloignée des bords, ou de la périphérie, de la partie fixe pour que cette périphérie puisse être solidarisée directement aux bords de la baie, sans que les rails n'interfèrent.

On peut ainsi s'affranchir de la présence d'un cadre de liaison entre les bords de la baie et la partie fixe.

Cette partie fixe peut être réalisée en un ou plusieurs éléments (placés les uns à côté des autres dans un même plan), par exemple en verre ou en polycarbonate.

Une telle baie flush peut ainsi être montée intégralement indépendamment du véhicule, et rapportée, depuis l'extérieur, dans le logement défini à cet effet par la baie, ou le logement, définie dans la carrosserie, ou plus généralement dans la paroi.

Les bords de la partie fixe sont solidarisés, par exemple à l'aide d'un cordon de colle, aux bords de la baie, sans autre élément intermédiaire de liaison.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Pour assurer un coulissement de la partie mobile, constituée généralement par un panneau transparent, on prévoit donc un dispositif de guidage comportant un premier et un second rails de guidage montés fixes sur la partie fixe (ou structure fixe) de la baie, de part et d'autre de l'ouverture fermée par le panneau mobile.

Le panneau mobile est monté sur les rails, pour coulisser par exemple selon une direction longitudinale, dans un plan de coulissement entre une (ou plusieurs) position d'ouverture et une position de fermeture, dans laquelle il obture l'ouverture.

Pour maximiser l'aspect affleurant, il a été proposé que, dans la position de fermeture, le panneau mobile s'inscrive dans le plan de la partie fixe, en passant d'une position intermédiaire de dégagement, dans le plan de coulissement, en regard de l'ouverture et dégagé de celle-ci à la position de fermeture.

On notera que le terme « plan » doit ici s'entendre dans une acception élargie : le plan formé par la baie est parfois courbe, selon une, voire deux, directions (ceci justifie également, dans certains cas, le terme « sensiblement » utilisé dans la description et les revendications).

Le panneau mobile peut être déplacé manuellement ou bien à l'aide d'un moteur électrique. Dans ce dernier cas, des moyens d'actionnement agissent sur le panneau mobile afin de déplacer ce dernier entre une position fermée et au moins une position ouverte. Généralement, les moyens d'actionnement se présentent sous la forme d'un câble (dit câble Push-Pull) relié au moteur électrique de sorte à tirer ou pousser le panneau mobile. Les moyens d'actionnement peuvent également se présenter sous la forme d'une crémaillère ou de câbles du type câble de vélo.

Les baies flush remportent un succès important, dans de nombreuses applications, du fait notamment de la simplicité de leur fabrication et de leur montage, et de l'aspect esthétique qu'elles permettent d'obtenir.

Lorsque le panneau mobile est fermé, l'étanchéité entre le panneau mobile et la partie fixe est assurée, classiquement, par un joint d'étanchéité.

Sur les baies actuelles, le panneau mobile se déplace selon un mouvement normal à son plan de forme (en Y pour une vitre latérale), les quatre coins du panneau mobile se déplaçant en même temps lors de l'ouverture.

En d'autres termes, le joint d'étanchéité se décolle simultanément sur l'ensemble du bord du panneau mobile (le joint d'étanchéité est décollé en une seule fois)

En cas de gel, le joint d'étanchéité peut rester collé à la vitre fixe ce qui nécessite des efforts excessifs pour ouvrir la vitre portant le joint d'étanchéité.

Dans certains cas, il y a un risque de dégradation du joint d'étanchéité ou du mécanisme d'ouverture de la vitre.

Il existe donc un besoin de fournir un dispositif d'obturation d'une baie qui permette un verrouillage et un déverrouillage, et plus généralement une ouverture et une fermeture, aisés, intuitifs et sans effort important.

Il existe également un besoin de fournir un dispositif d'obturation qui évite d'induire des effets néfastes et indésirables (frottements ou détériorations) entre le panneau mobile et les moyens d'étanchéité associés.

Il existe également un besoin de fournir une nouvelle technique de guidage d'un panneau mobile d'une baie d'obturation d'une structure, telle qu'un véhicule automobile ou similaire, permettant le passage d'une position d'obturation, affleurante avec le panneau fixe, à une position de coulissement, qui soit simple, efficace et fiable.

La solution technique devra en outre, autant que faire se peut, conserver tout ou partie des avantages des "baies flush" déjà développées par le titulaire, et notamment :
- aspect esthétique affleurant ;
- aspects aérodynamiques ;
- facilité et coût réduit de fabrication ;
- facilité et coût réduit de montage.

### Résumé de l'invention

La présente technique permet de résoudre au moins certains des inconvénients soulevés par l'art antérieur. Plus précisément, la présente technique se rapporte, selon un premier mode de réalisation, à un dispositif d'obturation d'une baie ménagée dans une structure, comprenant une partie fixe, dans laquelle est définie une ouverture, et au moins un panneau mobile coulissant guidé le long de deux rails de guidage montés sur une face du panneau fixe, entre une position de fermeture, obturant l'ouverture, dans un premier plan défini par le panneau fixe, dit plan d'obturation, et au moins une position d'ouverture, dans un second plan, dit plan de coulissement, sensiblement parallèle au plan d'obturation.

De plus, chacun des rails de guidage porte au moins une navette guidée en translation dans le rail, chaque navette comprenant deux pistes de guidage ou deux pions fixes aptes à coopérer respectivement avec deux pions fixes ou deux pistes de guidage porté(e)s par le panneau mobile.

Le dispositif d'obturation comprend en outre des moyens d'actionnement agissant sur une des navettes pour assurer un déplacement en translation de ces dernières dans les rails de guidage, et le passage du panneau mobile de la position d'obturation à ladite au moins une position de coulissement, et réciproquement.

Le dispositif d'obturation comprend en outre des moyens de synchronisation du déplacement des navettes, comprenant deux éléments de synchronisation.

Selon le premier mode de réalisation de la technique proposée, une extrémité d'un des éléments de synchronisation est reliée au cadre du panneau mobile par le biais d'un ressort de maintien du panneau mobile dans la position d'ouverture, les autres extrémités des éléments de synchronisation étant reliés à une des navettes.

Le ressort de maintien de la technique proposée exerce donc un effort pour maintenir le panneau mobile dans la position ouverte. Ainsi, en cas de frottement ou autres phénomène dynamique non souhaités, la force du ressort de maintien permet d'éviter toute tentative de fermeture manuelle par un utilisateur alors que le panneau mobile n'est pas en face de l'ouverture. En d'autres termes, le ressort de maintien empêche un mouvement du cadre du panneau mobile par rapport aux rails de guidage lorsque le panneau mobile est en position ouverte.

Selon un deuxième mode de réalisation, la présente technique se rapporte à un dispositif d'obturation d'une baie ménagée dans une structure, comprenant une partie fixe, dans laquelle est définie une ouverture, et au moins un panneau mobile coulissant guidé le long de deux rails de guidage montés sur une face du panneau fixe, entre une position de fermeture, obturant l'ouverture, dans un premier plan défini par le panneau fixe, dit plan d'obturation, et au moins une position d'ouverture, dans un second plan, dit plan de coulissement, sensiblement parallèle au plan d'obturation.

De plus, chacun des rails de guidage porte au moins une navette guidée en translation dans le rail, chaque navette comprenant deux pistes de guidage ou deux pions fixes aptes à coopérer respectivement avec deux pions fixes ou deux pistes de guidage porté(e)s par le panneau mobile.

Le dispositif d'obturation comprend en outre des moyens d'actionnement agissant sur une des navettes pour assurer un déplacement en translation de ces dernières dans les rails de guidage, et le passage du panneau mobile de la position d'obturation à ladite au moins une position de coulissement, et réciproquement.

Le dispositif d'obturation comprend en outre des moyens de synchronisation du déplacement des navettes, comprenant deux éléments de synchronisation.

Selon le deuxième mode de réalisation de la technique proposée, chaque extrémité des éléments de synchronisation est reliée à une des navettes, une extrémité d'un des éléments de synchronisation étant reliée à la navette sur laquelle agissent les moyens d'actionnement par le biais de moyens de mise sous tension des éléments de synchronisation, et en outre au moins un clip de maintien du panneau mobile en position ouverte est disposé dans au moins une desdites pistes desdites navettes.

Selon un aspect particulier de ce deuxième mode de réalisation, les moyens de mise sous tension des éléments de synchronisation se présentent sous la forme d'un ressort de rattrapage de jeux.

Le ressort de rattrapage des jeux est donc apte à exercer une force sur les câbles de synchronisation de sorte à rattraper les jeux et les manques de tensions dans ces câbles lors des déplacements des navettes. Ainsi, le ressort de rattrapage des jeux permet d'absorber/compenser la tolérance des câbles de synchronisation lors des déplacements des navettes de sorte à optimiser le déplacement coordonné/synchronisé de la navette supérieure avec la navette inférieure.

De cette manière, le ressort de rattrapage des jeux permet aussi, lorsqu'il y a des appuis multiples sur la commande du moteur d'absorber les à-coups du moteur et ainsi éviter les éventuels frottements des pions sur le rail inférieur.

Un autre avantage du ressort de rattrapage des jeux est qu'il permet également d'assister le moteur, notamment lors de l'ouverte du panneau mobile, de sorte à minimiser la consommation énergétique du moteur.

Selon un aspect de la technique proposée, chacun des éléments de synchronisation est logé dans une partie du cadre du panneau mobile.

Selon un autre aspect de la technique proposée, le ressort de maintien et le ressort de rattrapage de jeux sont des ressorts de traction.

Selon un aspect, une première des navettes se déplace dans un premier sens et une deuxième des navettes se déplace dans sens opposé lors d'au moins une phase de la fermeture et/ou de l'ouverture du panneau mobile.

Selon un aspect, le déplacement dans un premier sens de la première des navettes assure le déplacement transversal par rapport aux rails d'une première partie du panneau mobile, et le déplacement, dans le sens opposé puis dans le même sens, de la deuxième des navette assure le déplacement transversal par rapport aux rails de l'autre partie du panneau mobile, permettant le passage du panneau mobile dans une position intermédiaire de dégagement, dans le plan de coulissement, en regard de l'ouverture et dégagé de celle-ci.

Selon un aspect de la technique proposée, les moyens d'actionnement comprennent un câble d'entrainement motorisé agissant sur une des navettes.

Selon un autre aspect de la technique proposée, seul l'un des rails de guidage comprend des encoches de réception des pions fixes en position d'obturation du panneau mobile.

Selon un aspect de la technique proposée, une des navettes comprend une fourche située à proximité d'une extrémité du ressort de maintien ou du ressort de rattrapage de jeux et configurée pour venir en appui sur cette dernière lors du déplacement du panneau mobile de la position fermée vers l'une des positions de coulissement.

Selon un aspect de la technique proposée, la fourche constitue en outre un moyen de guidage d'un des éléments de synchronisation

### Liste des Figures

La technique proposée, ainsi que les différents avantages qu'elle présente, seront plus facilement compris, à la lumière de la description qui va suivre d'un mode de réalisation illustratif et non limitatif de celle-ci, et des dessins annexés parmi lesquels :
[Fig 1] illustre un exemple d'un dispositif d'obturation, ou baie flush, selon la technique proposée ;
[Fig 2] illustre une vue partielle du dispositif d'obturation de la figure 1, montrant un exemple de rail de guidage supérieur selon le premier ou le deuxième mode de réalisation de la technique proposée ;
[Fig 3] illustre une vue partielle du dispositif d'obturation de la figure 1, montrant un exemple de rail de guidage inférieur selon le premier ou le deuxième mode de réalisation de la technique proposée ;
[Fig 4] illustre une vue partielle du dispositif d'obturation de la figure 1, montrant un exemple de butée avant mis en oeuvre sur le rail de guidage inférieur de la figure 3 ;
[Fig 5] illustre une vue partielle d'un dispositif d'obturation montrant un exemple de navette supérieure, selon le premier ou le deuxième mode de réalisation de la technique proposée, apte à coulisser dans le rail de guidage de la figure 2 et présentant des pistes avant et arrière aptes à coopérer avec des pions portés par un panneau mobile du dispositif ;
[Fig 6] illustre une vue partielle d'un dispositif d'obturation montrant un exemple de navette inférieure, selon le premier ou le deuxième mode de réalisation de la technique proposée, apte à coulisser dans le rail de guidage de la figure 3 et présentant des pistes avant et arrière aptes à coopérer avec des pions portés par un panneau mobile du dispositif ;
[Fig 7] illustre une autre vue de la navette de la figure 6 ;
[Fig 8] illustre une autre vue de la navette de la figure 6 ;
[Fig 9] illustre une vue partielle et de dessous d'un dispositif d'obturation montrant un exemple de panneau mobile, selon le premier mode de réalisation de la technique proposée, portant des pions aptes à coopérer avec la navette inférieure de la figure 6 ;
[Fig 10] illustre une vue partielle et de dessous d'un dispositif d'obturation montrant un exemple de panneau mobile, selon le premier ou le deuxième mode de réalisation de la technique proposée, coopérant avec la navette inférieure de la figure 6 ;
[Fig 11] illustre une vue partielle et du dessus d'un dispositif d'obturation montrant un exemple de panneau mobile, selon le premier ou le deuxième mode de réalisation de la technique proposée, portant des pions aptes à coopérer avec la navette supérieure de la figure 5 ;
[Fig 12] illustre une vue partielle et du dessus d'un dispositif d'obturation montrant le panneau mobile de la figure 11 coopérant avec la navette supérieure de la figure 5 ;
[Fig 13] illustre une vue partielle d'un dispositif d'obturation montrant le cheminement des câbles de synchronisation des navettes à travers le panneau mobile et leur fixation sur les navettes inférieure et supérieure, selon le premier ou le deuxième mode de réalisation de la technique proposée ;
[Fig 14] illustre une vue partielle d'un dispositif d'obturation montrant en détail la navette inférieure et les câbles de synchronisation des navettes selon le premier mode de réalisation de la technique proposée ;
[Fig 15] illustre une vue de détail de la solidarisation du câble de synchronisation avant sur le ressort, selon le premier ou le deuxième mode de réalisation de la technique proposée ;
[Fig 16] illustre une vue partielle d'un dispositif d'obturation montrant les pions portés par le panneau mobile au sein des pistes de la navette supérieure de la figure 5 lorsque le panneau mobile est en position fermée, selon le premier ou le deuxième mode de réalisation de la technique proposée ;
[Fig 17] illustre une vue partielle d'un dispositif d'obturation montrant les pions portés par le panneau mobile au sein des pistes de la navette supérieure de la figure 5 lorsque le panneau mobile est en position ouverte, selon le premier ou le deuxième mode de réalisation de la technique proposée ;
[Fig 18] illustre une vue partielle d'un dispositif d'obturation montrant les pions portés par le panneau mobile au sein des pistes de la navette inférieure de la figure 6 lorsque le panneau mobile est en position fermée, selon le premier ou le deuxième mode de réalisation de la technique proposée ;
[Fig 19] illustre une vue partielle d'un dispositif d'obturation montrant les pions portés par le panneau mobile au sein des pistes de la navette inférieure de la figure 6 lorsque le panneau mobile est en position ouverte, selon le premier ou le deuxième mode de réalisation de la technique proposée ;
[Fig 20] illustre une vue partielle et du dessous d'un dispositif d'obturation montrant le ressort lorsque le panneau mobile est en position fermée, selon le premier mode de réalisation de la technique proposée ;
[Fig 21] illustre une vue partielle et du dessous d'un dispositif d'obturation montrant le ressort lorsque le panneau mobile est en position ouverte, selon le deuxième mode de réalisation de la technique proposée ;
[Fig 22] illustre une vue partielle d'un dispositif d'obturation montrant le déplacement des pions portés par le panneau mobile lorsque ce dernier se trouve en position fermée et en position ouverte de dégagement, selon le premier ou le deuxième mode de réalisation de la technique proposée ;
[Fig 23] illustre une vue partielle d'un dispositif d'obturation montrant le déplacement de la navette inférieure lorsque le panneau mobile se trouve en position fermée et en position ouverte de dégagement, selon le premier ou le deuxième mode de réalisation de la technique proposée ;
[Fig 24] illustre une vue partielle d'un dispositif d'obturation montrant le déplacement du panneau mobile lorsque ce dernier se trouve en position fermée et en position ouverte de dégagement, selon le premier ou le deuxième mode de réalisation de la technique proposée ;
[Fig 25] illustre une vue partielle d'un dispositif d'obturation montrant en détail la navette inférieure et les câbles de synchronisation des navettes selon le deuxième mode de réalisation de la technique proposée ;
[Fig 26] illustre une vue de détail de la solidarisation du câble de synchronisation avant sur le ressort et la solidarisation du ressort sur la navette inférieure, selon le deuxième mode de réalisation de la technique proposée ;
[Fig 27] illustre une vue en perspective d'un clip de maintien en position ouverte du panneau mobile mis en oeuvre dans une piste d'une des navettes selon le deuxième mode de réalisation de la technique proposée ;
[Fig 28] illustre une vue du dessus du clip de maintien de la figure 27 mis en oeuvre dans le deuxième mode de réalisation de la technique proposée ;
[Fig 29] illustre une autre vue en perspective du clip de maintien de la figure 27 mis en oeuvre dans le deuxième mode de réalisation de la technique proposée ;
[Fig 30] illustre une vue en perspective d'un pion de guidage coopérant avec le clip de maintien de la figure 27 lorsque le panneau mobile se trouve en position fermée ; et
[Fig 31] illustre une vue en perspective d'un pion de guidage coopérant avec le clip de maintien de la figure 27 lorsque le panneau mobile se trouve en position ouverte.

### Description détaillée de l'invention

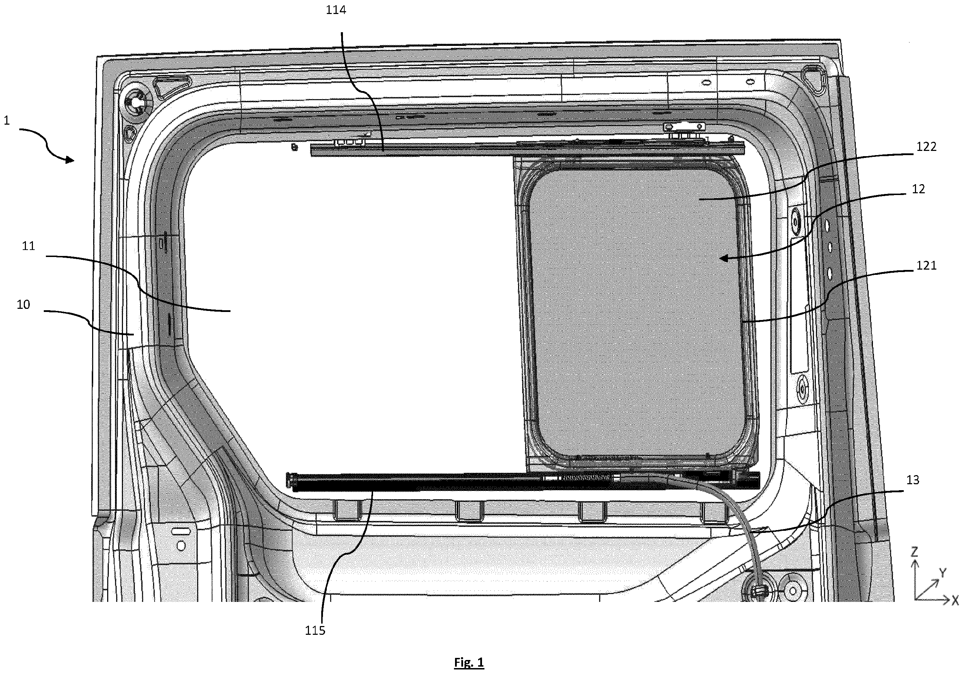

On illustre par la suite deux modes de réalisation de la technique proposée, traités à titre de simples exemples illustratifs, et non limitatifs, à l'appui des figures 1 à 31.

### Description d'un premier mode de réalisation

Le premier mode de réalisation de la technique proposée se réfère aux figures 1 à 25.

La **figure 1** illustre une baie flush à panneau mobile en coulissement vue de l'intérieur du véhicule.

Une telle baie flush 1 se présente sous la forme d'un ensemble, ou dispositif d'obturation, prêt à être placé dans une baie (c'est-à-dire une ouverture, ou un trou) ménagée dans la carrosserie 10 (paroi latérale par exemple) ou une porte, ou plus généralement dans la structure d'un véhicule (ou d'une caravane ou d'un camping-car, par exemple), ou plus généralement d'une paroi devant recevoir un dispositif d'obturation muni d'un ouvrant.

Un tel dispositif d'obturation comprend une partie fixe 11, c'est-à-dire restant immobile par rapport à la structure 10 qui la reçoit, et un panneau mobile en coulissement, ou panneau coulissant, 12, mobile par rapport à la partie fixe 11.

La partie fixe 11, encore appelée panneau fixe, peut notamment être réalisée en verre ou en polycarbonate, en un ou plusieurs éléments.

La partie fixe 11 est percée d'une ouverture obturée par le panneau mobile 12 dans la position de la figure 1 et s'étendant dans un même plan que la partie fixe 11.

Ce panneau mobile 12 comporte notamment une portion vitrée 122 et un cadre 121.

Des rails de guidage, respectivement un rail supérieur 114 et un rail inférieur 115, sont rapportés par collage sur la face de la partie fixe 11 orientée vers l'intérieur du véhicule.

On note que ces rails sont éloignés du contour de la partie fixe 11, et ne participent pas, ni ne nuisent, à la solidarisation de celle-ci au bord de la baie.

Les rails 114 et 115, qui sont sensiblement parallèles dans cet exemple, maintiennent et guident en coulissement le panneau mobile 12, qui présente un cadre 121 solidaire des rails 114, 115.

Le panneau mobile 12 peut être déplacé le long des rails 114, 115, dans un plan de coulissement sensiblement parallèle au plan défini par la partie fixe 11.

Le panneau mobile 12 peut venir obturer complètement l'ouverture de la partie fixe 11 (figure 1) ou libérer partiellement ou totalement cette ouverture.

Ainsi, le panneau mobile 12 peut prendre une ou plusieurs positions d'ouverture, selon sa position par rapport aux rails 114, 115.

Par ailleurs, le panneau mobile 12 peut se déplacer perpendiculairement au plan défini par la partie fixe 11, de façon à venir obturer l'ouverture, dans une position fermée (figure 1), dans laquelle elle affleure avec cette partie fixe 11, de façon à proposer un ensemble affleurant (carrosserie 10, partie fixe 11 et partie mobile 12).

La face de la partie fixe 11 tournée vers l'intérieur du véhicule porte par ailleurs un joint d'étanchéité (non représenté sur la figure 1) collé sur le contour de l'ouverture, dont l'extrémité de la lèvre vient prendre appui sur le panneau mobile 12, lorsque celui-ci est en position d'obturation.

Dans une variante, le joint d'étanchéité peut être monté sur le cadre 121 du panneau mobile 12, pour venir en contact avec la partie fixe 11.

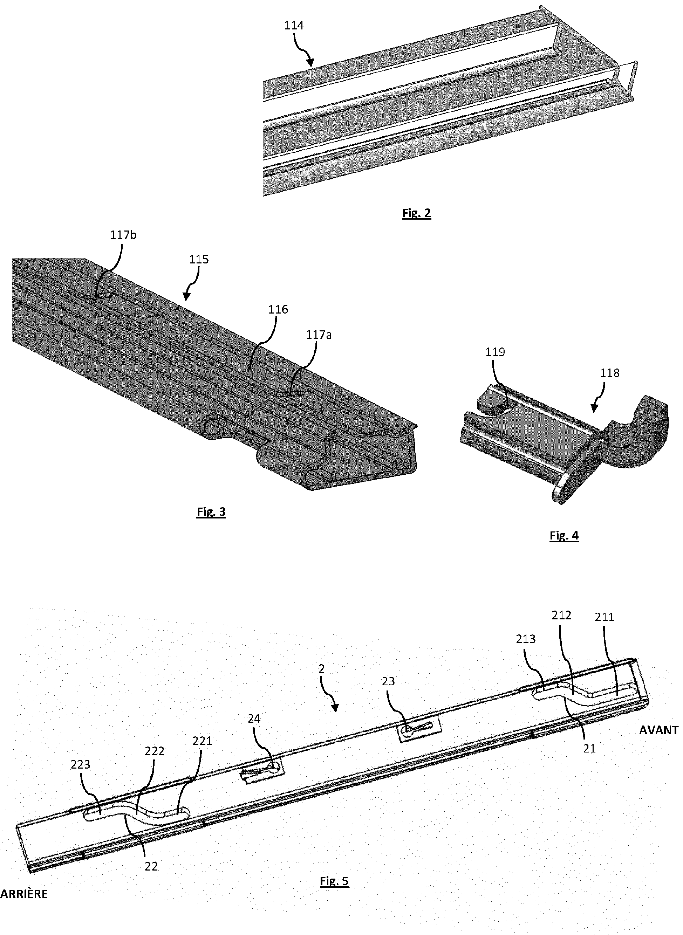

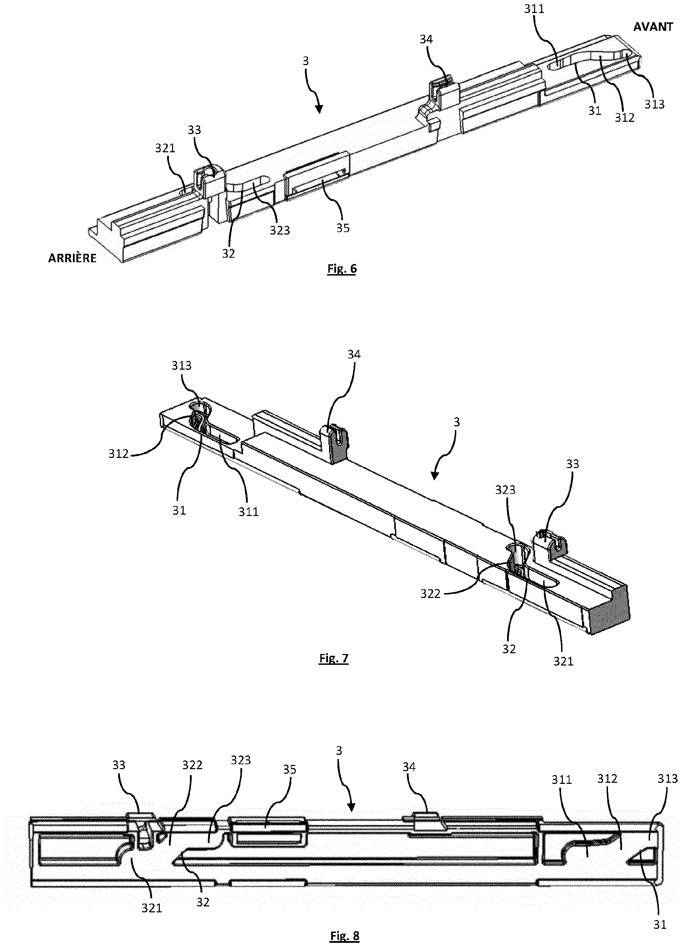

Le rail supérieur 114 porte une navette supérieure 2 (illustrée plus en détail sur la figure 5) et le rail inférieur 115 porte une navette inférieure 3 (illustrée plus en détail sur les figures 6 à 8), chacune des navettes portant deux gorges, ou pistes, situées au voisinage respectivement de chaque bord latéral du panneau mobile 12 et coopérant avec un pion avant et arrière solidaire d'un bord du panneau mobile 12.

Chaque navette 2, 3 est ainsi guidée en coulissement dans un rail 114, 115, selon un axe parallèle à l'axe X, c'est-à-dire l'axe correspondant à la longueur du véhicule.

Les différents mouvements du panneau mobile 12 sont contrôlés à partir de moyens de mise en mouvement des navettes 2, 3 à l'intérieur des rails de guidage 114, 115.

Le mouvement de la navette inférieure 3 le long du rail de guidage inférieure 115 est assuré par le biais d'un câble de commande, ou câble d'entrainement, 13 de type "push pull", lui-même entrainé par des moyens motorisés commandés par un utilisateur.

Plus précisément, le câble d'entrainement 13 est destiné soit à pousser sur la navette inférieure 3 (dans une direction inverse à l'axe X, c'est-à-dire vers l'arrière du véhicule) pour déplacer le panneau mobile 12 de sa position fermée vers l'une des positions ouvertes, soit pour tirer la navette inférieure 3 (dans la direction de l'axe X, c'est-à-dire vers l'avant du véhicule) pour déplacer le panneau mobile 12 d'une position ouverte vers sa position fermée.

Le câble d'entrainement 13 est, dans cet exemple, poussé ou tiré par un moteur (non illustré).

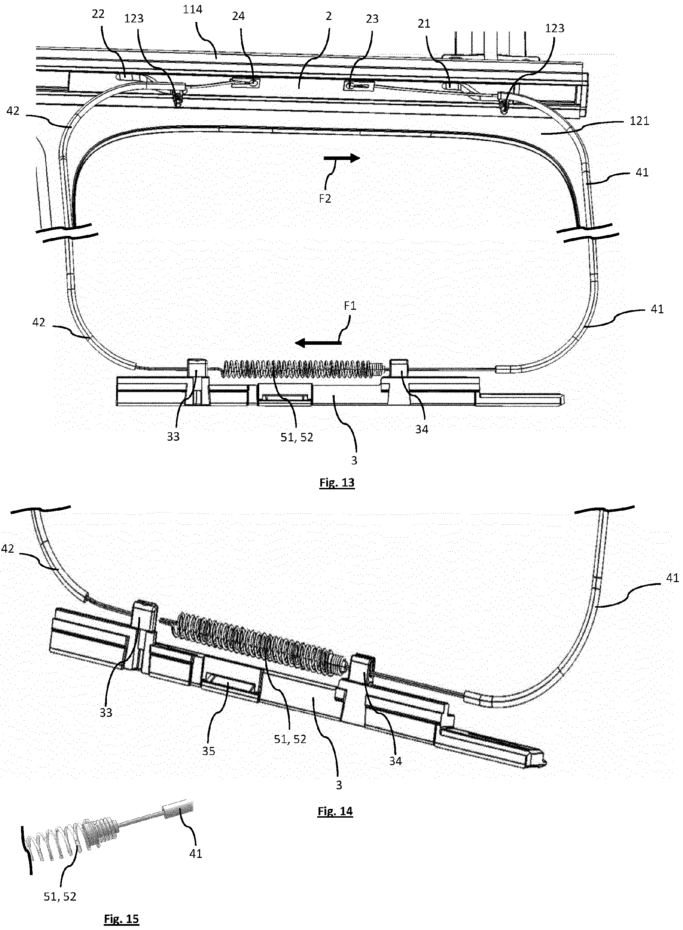

Le mouvement de la navette supérieure 2 le long du rail de guidage supérieur 114 est synchronisé au mouvement de la navette inférieure 3 par le biais de moyens de synchronisation se présentant, dans cet exemple, sous la forme de deux câbles de synchronisation (visibles sur la figure 13, notamment). On pourrait envisager de remplacer les câbles par des fils, des sangles ou bien des courroies, notamment.

Plus précisément, les navettes 2, 3 sont reliées entre elles par un câble de synchronisation avant 41 et un câble de synchronisation arrière 42.

La **figure 2** illustre partiellement le rail supérieur 114 du dispositif d'obturation selon la technique proposée. Le rail supérieur 114 est un rail classique qui comprend une paroi de fond et deux parois latérales s'étendant perpendiculairement à la paroi de fond. L'autre extrémité des parois latérales présente un court retour permettant de recevoir et maintenir la navette supérieure 2.

Le rail supérieur 114 est donc apte à recevoir la navette supérieure 2 de sorte à ce que cette dernière puisse coulisser longitudinalement dans le rail 114 selon l'axe X. On note que le rail supérieur 114 ne prévoit aucune encoche faisant obstacle à la fermeture ou l'ouverture du panneau mobile 12. Ainsi, le rail 114 est simple et peu coûteux à fabriquer.

La **figure 3** illustre partiellement le rail inférieur 115 du dispositif d'obturation selon la technique proposée. Le rail inférieur 115 comprend une paroi de fond et deux parois latérales s'étendant perpendiculairement à la paroi de fond. La paroi latérale située du côté du véhicule comprend un retour 116 qui s'étend perpendiculaire à cette dernière et vers l'intérieur du véhicule. Le retour 116 présente deux encoches, à savoir une encoche avant 117a et une encoche arrière 117b, aptes à recevoir chacune un pion porté par le panneau mobile 12 lorsque ce dernier est en position fermée.

La **figure 4** illustre la butée avant 118 du rail inférieur 115 du dispositif d'obturation selon la technique proposée. La butée avant 118 comprend un corps présentant une forme complémentaire au rail inférieur 115 de sorte à pouvoir être insérée dans l'extrémité avant du rail inférieur 115, c'est-à-dire l'extrémité du rail situé vers l'avant du véhicule. Le corps de la butée avant 118 comprend une rainure, ou encoche, 119 présentant une forme courbe, sensiblement en virgule, dont l'extrémité ou fond est positionné(e) en regard de l'encoche avant 117a du rail inférieur 115 lorsque la butée avant 118 est insérée dans le rail inférieur 115.

La **figure 5** illustre la navette supérieure 2 selon une vue de dessous. La navette supérieure 2 se présente sous la forme d'un barreau de dimensions adaptées pour coulisser dans le rail de guidage supérieur 114 et présente des pistes avant et arrière aptes à coopérer avec des pions portés par le panneau mobile 12.

Plus précisément, la navette supérieure 2 comprend, une piste, dite piste avant, 21 qui contrôle le déplacement de la partie distale du panneau mobile 12 (la partie du panneau la plus proche de l'avant du véhicule) et une piste, dite piste arrière, 22 qui contrôle le déplacement de la partie proximale de ce même panneau mobile 12, opposée à la partie distale.

La navette supérieure 2 comprend également des éléments de solidarisation 23, 24 des câbles de synchronisation mentionnés précédemment. Ces câbles de synchronisation seront décrits plus en détails dans la suite de cette description.

Les **figures 6 à 8** illustrent la navette inférieure 3 selon une vue de face, une vue de derrière et une vue de dessous respectivement.

La navette inférieure 3 se présente sensiblement sous la forme d'un barreau de dimensions adaptées pour coulisser dans le rail de guidage inférieur 115 et présente des pistes avant et arrière aptes à coopérer avec des pions portés par le panneau mobile 12.

Plus précisément, la navette inférieure 3 comprend, une piste, dite piste avant, 31 qui contrôle le déplacement de la partie distale du panneau mobile 12 (la partie du panneau la plus proche de l'avant du véhicule) et une piste, dite piste arrière, 32 qui contrôle le déplacement de la partie proximale de ce même panneau mobile 12, opposée à la partie distale.

Dans cet exemple, les pistes des navettes supérieure 2 et inférieure 3 présentent des formes sensiblement identiques. Bien évidemment, de nombreuses variantes de forme de pistes peuvent être envisagées en fonction du guidage souhaité du cadre 121 du panneau mobile 12 par rapport aux navettes 2, 3. Des formes différentes permettent notamment de choisir quel bord du panneau mobile 12 doit être louvoyé en premier lors de l'ouverture du panneau mobile 12.

Comme illustré sur les figures 5 à 8, les pistes avant 21, 31 des navettes supérieure 2 et inférieure 3 respectivement comprennent une première portion rectiligne 211, 311 s'étendant parallèlement à l'axe de coulissement. Cette première portion rectiligne 211, 311, positionnée à proximité du bord de la navette orienté vers l'extérieur du véhicule, correspond à la position d'obturation du bord avant du panneau mobile 12.

Les navettes 2, 3 comprennent également une portion inclinée 212, 312 qui forme, par rapport à cet axe de coulissement, un angle α compris environ entre 25° et 50°. De préférence, cette portion 212, 312 inclinée présente un angle d'environ 45° et permet de contrôler le changement de position du bord avant du panneau mobile 12.

La portion inclinée 212, 312 est prolongée par une deuxième portion rectiligne 213, 313 s'étendant parallèlement à l'axe de coulissement. Cette deuxième portion rectiligne 213, 313, positionnée à proximité du bord de la navette orienté vers l'intérieur du véhicule, correspond à la position de dégagement du bord avant du panneau mobile 12 par rapport au panneau fixe 11.

Les pistes arrière 22, 32 présentent, dans cet exemple, des formes sensiblement identiques aux pistes avant 21, 31. Ainsi, elles comprennent une première portion rectiligne 221, 321 correspondant à la position d'obturation du bord arrière du panneau mobile 12, une portion inclinée 222, 322 qui forme, par rapport à cet axe de coulissement, un angle α compris environ entre 25° et 50°. De préférence, cette portion 222, 322 inclinée présente un angle d'environ 45° et permet de contrôler le changement de position du bord arrière du panneau mobile 12.

La portion inclinée 222, 322 est prolongée par une deuxième portion rectiligne 223, 323 s'étendant parallèlement à l'axe de coulissement. Cette deuxième portion rectiligne 223, 323, positionnée à proximité du bord de la navette orienté vers l'intérieure du véhicule, correspond à la position de dégagement du bord arrière du panneau mobile 12 par rapport au panneau fixe 11.

Ainsi, quatre pistes au total sont mises en oeuvre dans les navettes 2, 3 (et non pas dans les rails 114, 115), dont deux pistes avant 21, 31 et deux pistes arrière 22, 32.

D'autres angles, et le cas échéant des formes légèrement différentes, par exemple incurvées, peuvent être envisagées pour les pistes 21 ,22, 31 et 32.

Par ailleurs, la navette inférieure 3 comprend une première protubérance 33 située sensiblement en regard de la piste arrière 32 et configurée pour permettre une solidarisation du câble de synchronisation arrière 42 sur la navette inférieure 3.

La navette inférieure 3 comprend également une deuxième protubérance 34 se présentant sensiblement sous la forme d'une fourche. Cette fourche 34 est située sensiblement au niveau du tiers avant de la navette inférieure 3 et est configurée pour permettre le passage et le guidage du câble de synchronisation avant 41 et, le cas échéant, pour venir en appui contre le ressort de maintien 51, comme expliqué en détail dans la suite de cette description.

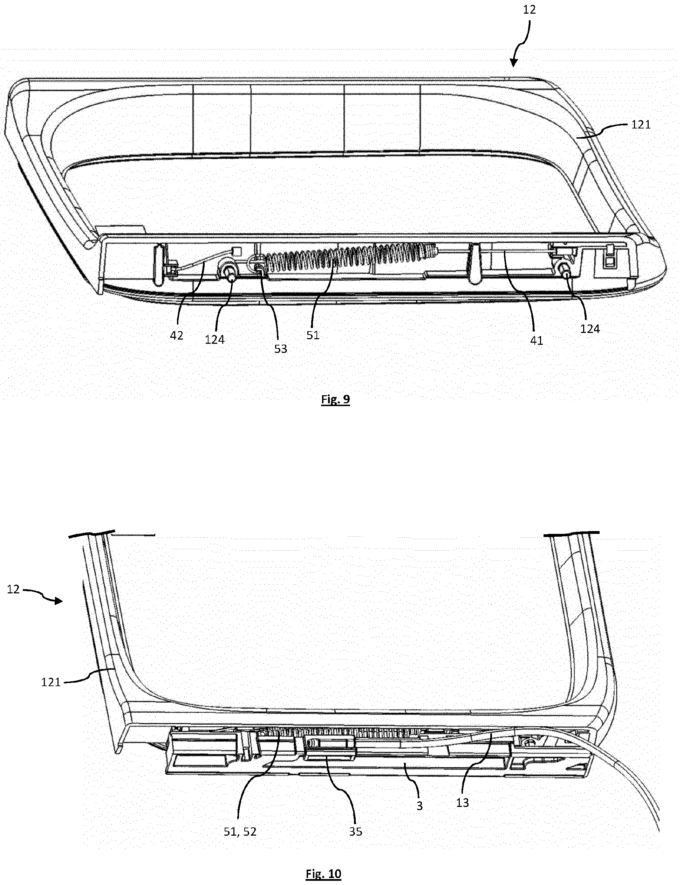

La **figure 9** illustre une vue de dessous du panneau mobile du dispositif d'obturation selon la technique proposée. Sur cette figure, la navette inférieure 3 n'est pas représentée tandis que les câbles de synchronisation 41, 42 et le ressort de maintien 51 sont illustrés.

Le ressort de maintien 51 est, dans ce mode de réalisation, fixé sur le cadre 121 du panneau mobile 12 au niveau d'un pion de fixation 53.

La **figure 10** illustre une vue de dessous du panneau mobile 12 sur laquelle la navette inférieure 3 et le câble d'entrainement 13 sont illustrés. Dans cet exemple, le câble d'entrainement 13 est clippé ou encliqueté sur l'élément de solidarisation 35 de la navette inférieure 3 (visible sur les figures 6 et 8 notamment). D'autres solutions de solidarisation du câble d'entrainement 13 sur la navette inférieure 3 sont envisageables.

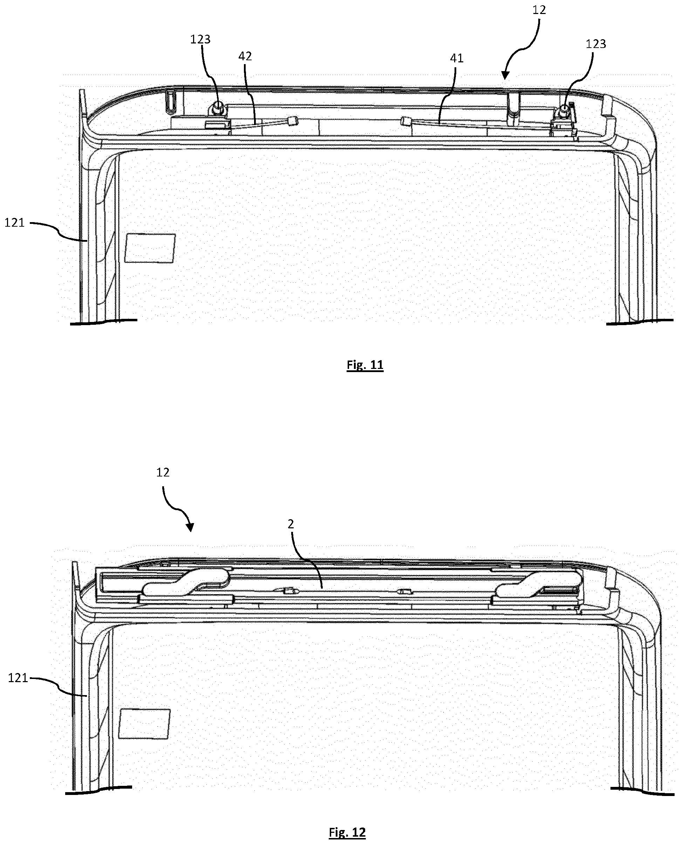

La **figure 11** illustre une vue de dessus du panneau mobile 12 du dispositif d'obturation selon la technique proposée. Sur cette figure, la navette supérieure 2 n'est pas représentée tandis que les câbles de synchronisation 41, 42 sont illustrés.

La **figure 12** illustre une vue de dessus du panneau mobile 12 sur laquelle la navette supérieure 2 est illustrée.

Dans l'exemple illustré sur les figures 9 à 12, le cadre 121 du panneau mobile 12 porte deux pions de guidage supérieurs 123 et deux pions de guidage inférieurs 124 prévus pour coopérer avec une piste correspondante formée respectivement dans les navettes 2 et 3 du rail supérieur 114 et du rail inférieur 115, pour contrôler la fermeture et l'ouverture du panneau mobile 12, c'est-à-dire son déplacement dans une direction perpendiculaire à l'axe de coulissement (classiquement l'axe Y du véhicule, correspondant à sa largeur).

Un pion de guidage inférieur 124 est ainsi solidaire de la partie distale du bord inférieur du panneau mobile 12 et un autre pion de guidage inférieur 124 est solidaire de la partie proximale du bord inférieur du panneau mobile 12, opposée à la partie distale.

De la même manière, un pion de guidage supérieur 123 est solidaire de la partie distale du bord supérieur du panneau mobile 12 et un autre pion de guidage supérieur 123 est solidaire de la partie proximale du bord supérieur du panneau mobile 12, opposée à la partie distale.

Les pions supérieurs 123 et inférieurs 124 du panneau mobile 12 se déplacent alors dans les pistes avant et arrière des navettes supérieure 2 et inférieure 3.

La **figure 13** illustre une vue partielle du panneau mobile du dispositif d'obturation montrant le cheminement des câbles de synchronisation 41, 42 de la navette inférieure 3 jusqu'à la navette supérieure 2 à travers le cadre 121 du panneau mobile 12.

Les câbles de synchronisation 41, 42 relient donc les navettes supérieure 2 et inférieure 3 entre elles de sorte à assurer un déplacement optimal des navettes, et donc du panneau mobile 12, lorsque le câble d'entrainement 13 est actionné.

La **figure 14** illustre une vue partielle du panneau mobile du dispositif d'obturation montrant la navette inférieure 3 ainsi que les câbles de synchronisation 41, 42 et le ressort de maintien 51.

Comme illustré, le câble de synchronisation avant 41 est reçu et guidé à travers la fourche 34 et est solidarisé sur l'extrémité avant du ressort de maintien 51, comme illustré sur la **figure 15****.** Il est à noter que dans ce premier mode de réalisation, et comme précisé précédemment, le ressort de maintien 51 est fixé au cadre 121 du panneau mobile 12. Il est à noter que le ressort de maintien 51 n'est pas fixé sur la protubérance 33 de la navette inférieure 3 comme pourrait le suggérer la figure 13.

Plus précisément, la fourche 34 est positionnée à quelques millimètres de l'extrémité du ressort de maintien 51 sur laquelle le câble de synchronisation avant 41 est solidarisé. De préférence, la fourche est située environ entre 1 et 5 mm de l'extrémité du ressort de maintien 51. Préférentiellement, la distance entre la fourche 34 et l'extrémité du ressort de maintien 51 est d'environ 3mm. En fonctionnement dit « normal » du dispositif 1, la distance entre la fourche 34 et l'extrémité du ressort de maintien 51 est constante.

Un jeu est donc prévu entre la fourche 34 et le ressort de maintien 51 et correspond sensiblement à la tolérance d'allongement du câble de synchronisation avant 41.

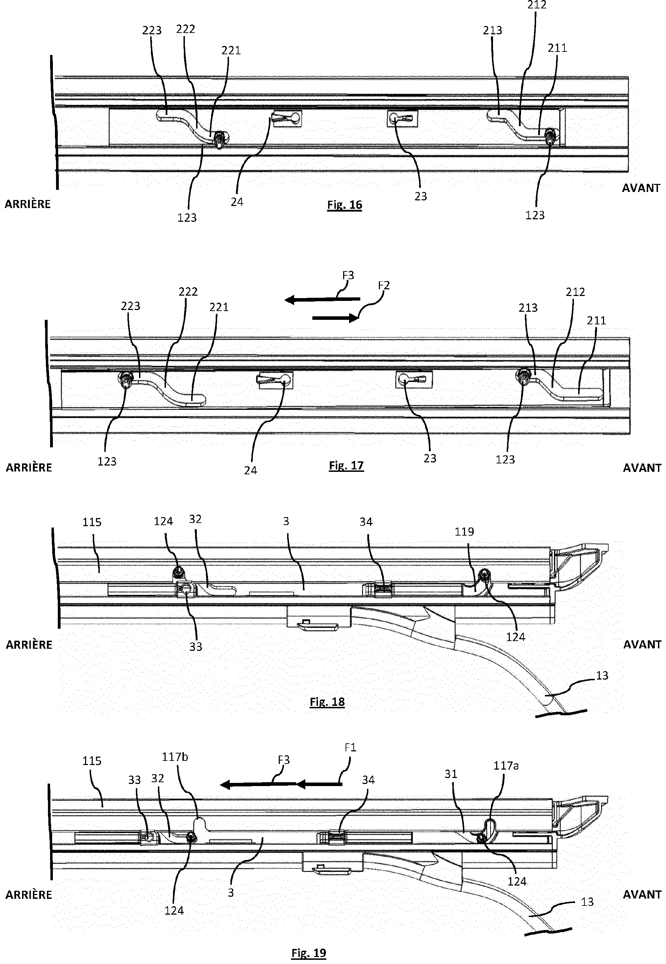

Les **figures 16 et 17** illustrent une vue partielle du panneau mobile du dispositif d'obturation montrant le rail supérieur 114, la navette supérieure 2 ainsi que les pions 123 du panneau mobile 12, respectivement en position fermée et en position ouverte de dégagement.

Les **figures 18 et 19** illustrent une vue partielle du panneau mobile du dispositif d'obturation montrant le rail inférieur 115, la navette inférieure 3 ainsi que les pions 124 du panneau mobile 12, respectivement en position fermée et en position ouverte de dégagement.

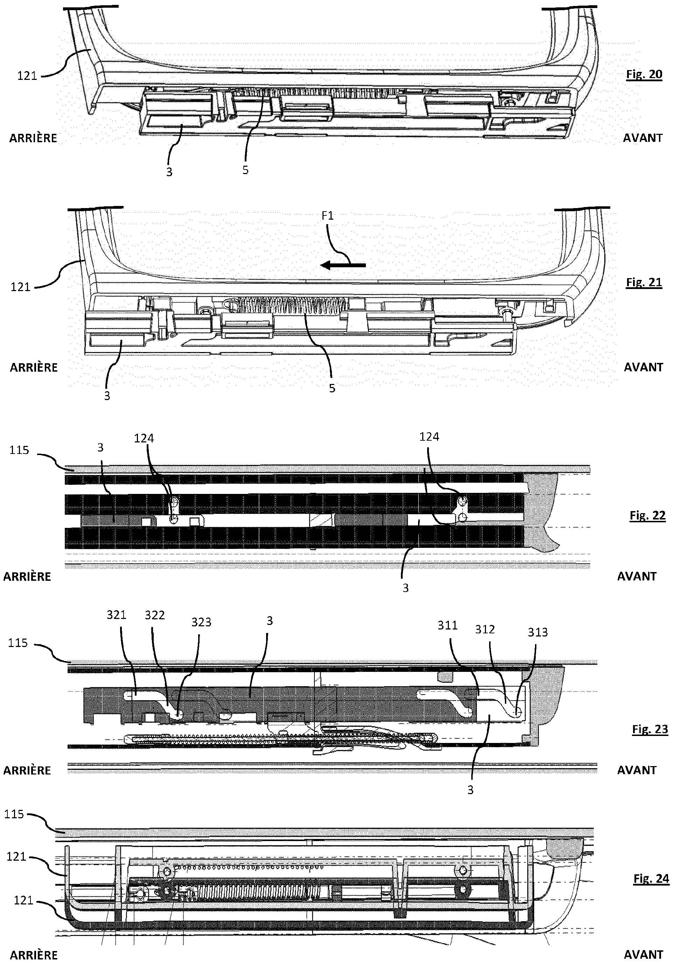

Les **figures 20 et 21** illustrent une vue partielle du panneau mobile du dispositif d'obturation montrant la navette inférieure 3 et le ressort de maintien 51, respectivement en position fermée et en position ouverte de dégagement.

Les **figures 22 à 24** illustrent respectivement le déplacement des pions 124, de la navette inférieure 3 et du panneau mobile 12 entre la position fermée et la position ouverte de dégagement.

Comme illustré sur la figure 16, les pions 123 portés par le bord supérieur du panneau mobile 12 sont, dans la position d'obturation ou fermée du panneau mobile 12, en butée à l'extrémité fermée de la première portion rectiligne 211, 221 de la piste avant 21 et de la piste arrière 22.

De la même façon, et comme illustré sur la figure 18, les pions 124 portés par le bord inférieur du panneau mobile 12 sont, dans la position d'obturation ou fermée du panneau mobile 12, en butée à l'extrémité fermée de la première portion rectiligne 311, 321 de la piste avant 31 et de la piste arrière 32.

En position d'obturation ou fermée du panneau mobile 12, les pions 124 portés par le bord inférieur du panneau mobile 12 sont reçus dans les encoches 117a, 117b du rail inférieur 115 de sorte à immobiliser/maintenir le panneau mobile 12 dans cette position. Cette position des pions 124 est également visible sur la figure 22.

Comme illustré sur la figure 20, dans la position d'obturation du panneau mobile 12, le ressort de maintien 51, qui est un ressort fonctionnant en traction, est en extension.

Sur les figures 19 et 23, la navette inférieure 3 s'est déplacée de la droite (avant du véhicule) vers la gauche (arrière du véhicule) comme illustré par la flèche F1 horizontale. Ce premier déplacement F1, correspondant à la première phase d'ouverture, s'effectue sur une distance d'environ 30mm, à savoir une distance sensiblement équivalente à la longueur des pistes des navettes 2 et 3, dans cet exemple.

Ainsi, les pions 124 qui coopèrent avec les pistes avant 31 et arrière 32 de la navette inférieure 3 se sont déplacés le long de la première portion rectiligne 311, 321 puis dans la portion inclinée 312, 322.

Les pions 124 se sont donc extrait des encoches 117a, 117b du rail inférieur 115 de sorte à décaler immédiatement et progressivement, selon l'axe Y, le bord inférieur du panneau mobile 12 (comme illustré sur la figure 24) entrainant ainsi son louvoiement.

Le déplacement de la navette inférieure 3 selon la flèche F1 de la figure 19 (première phase d'ouverture) entraine tout d'abord un déplacement d'une course identique de la navette supérieure 2 dans le sens opposé (selon la flèche F2 de la figure 17, correspondant à la deuxième phase d'ouverture) du fait de la tension des câbles de synchronisation 41, 42.

En effet, sous l'effet du déplacement de la navette inférieure 3 vers l'arrière du véhicule, le câble de synchronisation arrière 42 va se détendre tandis que la tension du ressort de maintien 51 ajoutée à la tension du câble de synchronisation avant 41 va tirer la navette supérieure 2 vers l'avant du véhicule (dans le sens opposé donc).

De cette manière, lors de ce mouvement de la navette supérieure 2 selon la flèche F2 (vers l'avant du véhicule), les pions 123 se déplacent dans les pistes 21, 22 de la navette supérieure 2, de la portion rectiligne 211 jusqu'à la portion rectiligne opposée 213, afin de permettre un louvoiement du bord supérieur du panneau mobile 12.

En poursuivant le déplacement de la navette inférieure 3, selon la flèche F3, vers l'arrière du véhicule, le câble de synchronisation arrière 42 va se tendre jusqu'à ce que la tension des câbles 41, 42 soit à l'équilibre. Une fois l'équilibre des tensions atteint entre les câbles de synchronisation 41, 42, le déplacement de la navette inférieure 3 va entrainer un déplacement du panneau mobile 12. Cet équilibre permet également un déplacement synchronisé de la navette supérieure 2 avec la navette inférieure 3 (selon la flèche F3, correspondant à la troisième phase d'ouverture), c'est-à-dire vers l'arrière du véhicule.

Dans cet exemple, la cinématique permet donc un louvoiement successif du bord inférieur puis du bord supérieur du panneau mobile 12. C'est donc le bord inférieur du panneau mobile 12 qui se décale en Y, puis le bord supérieur à partir de la position d'obturation du panneau mobile 12.

Dans une variante, il est possible d'obtenir un louvoiement successif du bord supérieur puis du bord inférieur du panneau mobile 12. C'est donc le bord supérieur du panneau mobile 12 qui se décale en Y, puis le bord inférieur à partir de la position d'obturation du panneau mobile 12.

Bien évidemment, et selon la forme des pistes 21, 22 ,31 ,32 il est possible d'obtenir un louvoiement successif du bord avant puis du bord arrière ou tout autre mouvement.

Ainsi, le joint d'étanchéité ne se décolle pas simultanément sur l'ensemble du bord du panneau mobile. En cas de gel, le joint d'étanchéité est donc décollé progressivement de sorte à ne pas induire d'efforts excessifs de la part du moteur pour ouvrir la vitre portant le joint d'étanchéité. De cette manière, les risques de dégradation du joint d'étanchéité ou du mécanisme d'ouverture de la vitre sont minimisés.

On peut par une consigne électronique arrêter le moteur (et donc le déplacement des navettes supérieure 2 et inférieure 3) dans cette position intermédiaire/ouverte de dégagement.

Lorsque le moteur continue de pousser (vers l'arrière du véhicule) la navette inférieure 3 (et la navette supérieure 2 via les câbles de synchronisation 41, 42), les pions 123, 124 coopérant avec les pistes avant 21, 31 et arrière 22, 32 sont en butée dans les deuxième portions rectilignes 213, 223, 313, 323.

Ainsi, les pions 123, 124 portés par panneau mobile 12 sont, dans la position intermédiaire de dégagement, en butée à l'extrémité fermée de la deuxième portion rectiligne 213, 223, 313, 323, comme illustré sur les figures 17, 19 et 20.

Sur ces figures, le dégagement du panneau mobile est terminé. Le panneau mobile 12 est dans une position intermédiaire de dégagement, c'est-à-dire qu'il se retrouve dans le plan de coulissement, parallèle à la vitre fixe 11, et en face de l'ouverture ménagée dans cette dernière.

Une fois l'ensemble du panneau mobile 12 décalé en Y, le déplacement des navettes 2, 3 de la droite vers la gauche entraîne le coulissement en X du panneau mobile 12, dans le plan de coulissement, de la droite vers la gauche.

Le panneau mobile 12 peut ainsi coulisser le long des rails 114, 115 jusqu'à une position extrême dite d'ouverture maximale.

Par une consigne électronique, le moteur et le panneau mobile 12 coulissant peuvent s'arrêter dans une position intermédiaire de coulissement, ou position intermédiaire d'ouverture quelconque.

Le mouvement du panneau mobile 12 par rapport à la partie fixe 11 peut donc se décomposer en deux déplacements indépendants :
- un déplacement perpendiculaire vers l'intérieur du véhicule en deux temps par rapport au plan formé par la partie fixe 11, permettant le passage d'une position fermée et verrouillée, dans laquelle le panneau mobile 12 se trouve dans le même plan que la partie fixe 11 et l'ouverture, à une position intermédiaire de dégagement, dans laquelle le panneau mobile 12 est décalé par rapport à la partie fixe 11 en regard de l'ouverture et dégagé de celle-ci, dans un plan de coulissement, de façon à permettre ce coulissement - le panneau mobile 12 est ainsi mobile selon une direction de dégagement perpendiculaire à la direction de coulissement;
- un déplacement dans le plan de coulissement, parallèle au plan formé par la partie fixe 11.

Le passage de la position intermédiaire de dégagement à la position d'obturation se fait de façon symétrique.

Ainsi, le moteur déplace les navettes de la gauche vers la droite, et une fois le panneau mobile 12 situé en regard de l'ouverture, le panneau mobile 12 se décale en Y jusqu'à ce que les pions 124 coopèrent avec les encoches 117a, 117b du rail inférieur 115.

Plus précisément, et de façon similaire à l'ouverture, lorsque la navette inférieure 3 est déplacée vers l'avant du véhicule afin de déplacer le panneau mobile 12 vers la position d'obturation, le déplacement de la navette inférieure 3 vers l'avant (première phase de fermeture) entraine un déplacement dans le sens opposé (vers l'arrière du véhicule, correspondant à la deuxième phase de fermeture) de la navette supérieure 2 du fait de la tension du câble de synchronisation arrière 42.

La navette inférieure 3 est entrainée jusqu'à ce que les pions 124 coopèrent avec les encoches 117a, 117b du rail inférieur 115. Pour ce faire, l'embout 118 (illustré sur la figure 4) d'extrémité avant du rail inférieur 115 présente une rainure 119 en virgule qui permet de guider le pion avant 124 porté par le bord inférieur du panneau mobile 12 dans l'encoche 117a du rail inférieur 115.

En position fermée du panneau mobile 12, le ressort de maintien 51 exerce une traction continue de sorte à tirer les navettes 2, 3 l'une vers l'autre et maintenir les pions 124 portés par le bord inférieur du panneau mobile 12 dans les encoches 117a, 117b.

Comme indiqué précédemment, la technique proposée met en oeuvre un ressort de maintien 51 qui est un ressort fonctionnant en traction qui exerce une force (d'environ 50N, par exemple) sur le câble de synchronisation avant 41 de sorte à maintenir la position ouverte du panneau mobile 12.

Ce ressort de maintien 51 en position ouverte fonctionne donc de manière différentes des ressorts mis en oeuvre dans les solutions de l'art antérieur qui visent à assister/aider la fermeture du panneau mobile.

En effet, le ressort de maintien 51 de la technique proposée exerce un effort pour maintenir la position ouverte du panneau mobile afin que les pions 123, 124 portés par le cadre du panneau mobile 12 soient maintenus au fond des pistes 21, 22, 31, 32 des navettes 2 et 3, et plus précisément au niveau des portions 213, 223, 313 et 323 (comme illustré sur les figures 17 et 23 notamment).

Ainsi, en cas de frottement ou autres phénomènes dynamiques non souhaités, la force du ressort de maintien 51 est suffisamment élevée pour éviter toute tentative de fermeture manuelle par un utilisateur alors que le panneau mobile 12 n'est pas en face de l'ouverture, c'est-à-dire lorsque les pions 124 ne sont pas en face des encoches 117a, 117b.

En d'autres termes, le ressort de maintien 51 empêche un mouvement du cadre 121 du panneau mobile 12 par rapport aux rails de guidage 114, 115 lorsque le panneau mobile 12 est en position ouverte.

Par ailleurs, les pions 124 présentent un jeu suffisant selon l'axe Y avec le rail 115 pour éviter tout frottement de sorte à éviter toute détérioration de ce dernier (usure, changement de couleur ou bruit lors de l'ouverture/fermeture du panneau mobile).

Le ressort de maintien 51 en position ouverte présente également l'avantage d'absorber/compenser la tolérance des câbles de synchronisation 41, 42 lors des déplacements de la navette inférieure 3 de sorte à optimiser le déplacement coordonné de la navette supérieure 2 avec la navette inférieure 3.

Le ressort de maintien 51 permet aussi, lorsqu'il y a des appuis multiples sur la commande du moteur (commandes d'ouverture et de fermeture successives et dans un laps de temps très faible), d'absorber les à-coups du moteur et ainsi d'éviter les éventuels frottements des pions 124 sur le retour 116 du rail inférieur 115.

De cette manière, les détériorations du rail inférieur 115 (usure, bruit, changement de couleur), du panneau mobile 12 et du panneau fixe 11 sont évitées. Par ailleurs, les contacts non souhaités entre le panneau mobile 12 et le panneau fixe 11 sont également évités.

Selon la technique proposée, la navette inférieure 3 comprend une fourche 34 située sensiblement au niveau du tiers avant de la navette inférieure 3 qui est configurée pour permettre le passage du câble de synchronisation avant 41 et guider ce dernier.

Plus précisément, la fourche 34 se situe à quelques millimètres de l'extrémité du ressort de maintien 51 recevant le câble de synchronisation avant.

Dans cet exemple, la distance entre la fourche 34 et l'extrémité du ressort de maintien 51 est d'environ 3 mm, ce qui correspond sensiblement à la tolérance des câbles de synchronisation 41, 42.

De cette manière, lors d'une situation non souhaitée, par exemple en cas de gel faisant que le panneau mobile 12 reste collé au joint d'étanchéité du panneau fixe 11 ou en présence d'un obstacle à la fermeture, la fourche 34 peut assister le ressort de maintien 51 pour permettre l'ouverture de la baie.

Plus précisément, dans une situation normale d'utilisation, lorsque le câble d'entrainement 13 est actionné pour déplacer le panneau mobile 12 vers la position ouverte, le ressort de maintien 51 va tirer sur le câble de synchronisation avant 41 afin de déplacer la navette supérieure 2. Dans cette situation, dite « normale », la distance entre l'extrémité du ressort de maintien 51 et la fourche 34 reste identique, à savoir d'environ 3mm.

Toutefois, lors d'une situation anormale, le ressort de maintien 51 n'est pas suffisamment puissant pour permettre le déplacement de la navette supérieure 2, et cela à cause de l'obstacle ou du gel.

Ainsi, la navette inférieure 3 va se déplacer de quelques millimètres, ce qui correspond à la distance entre la fourche 34 et le ressort de maintien 51 jusqu'à ce que la fourche 34 vienne en contact/appui sur l'extrémité du ressort 51.

C'est alors la fourche 34 qui va directement pousser sur l'extrémité du ressort de maintien 51 de sorte à assister ce dernier pour déplacer la navette supérieure 2. En d'autres termes, la force du moteur exercée sur la navette inférieure 2 via le câble d'entrainement 13 est directement transmise par la fourche 34 sur le câble de synchronisation avant 41 afin de déplacer la navette supérieure 2. La fourche 34 se substitue donc au ressort de maintien 51 lorsque ce dernier n'est pas suffisamment puissant pour déplacer la navette supérieure 2.

Dans le cas d'une situation anormale, deux situations sont possibles lorsque la fourche 34 entraine le câble de synchronisation 41, à savoir :
- la force du moteur transmise directement sur la fourche 34 est suffisante pour débloquer le panneau mobile 12 (décoller le joint d'étanchéité ou surpasser l'obstacle, par exemple) et permettre l'ouverture du panneau mobile 12,
- la force du moteur transmise directement sur la fourche 34 n'est pas suffisante et une détection électronique de surchauffe du moteur permet un arrêt de ce dernier avant que le panneau mobile 12 n'entre en collision avec le panneau fixe 11.

### Description d'un deuxième mode de réalisation

Le deuxième mode de réalisation de la technique proposée se réfère aux figures 1 à 8, 10 à 19 et 22 à 31.

La **figure 1** illustre une baie flush à panneau mobile en coulissement vue de l'intérieur du véhicule.

Une telle baie flush 1 se présente sous la forme d'un ensemble, ou dispositif d'obturation, prêt à être placé dans une baie (c'est-à-dire une ouverture, ou un trou) ménagée dans la carrosserie 10 (paroi latérale par exemple) ou une porte, ou plus généralement dans la structure d'un véhicule (ou d'une caravane ou d'un camping-car, par exemple), ou plus généralement d'une paroi devant recevoir un dispositif d'obturation muni d'un ouvrant.

Un tel dispositif d'obturation comprend une partie fixe 11, c'est-à-dire restant immobile par rapport à la structure 10 qui la reçoit, et un panneau mobile en coulissement, ou panneau coulissant, 12, mobile par rapport à la partie fixe 11.

La partie fixe 11, encore appelée panneau fixe, peut notamment être réalisée en verre ou en polycarbonate, en un ou plusieurs éléments.

La partie fixe 11 est percée d'une ouverture obturée par le panneau mobile 12 dans la position de la figure 1 et s'étendant dans un même plan que la partie fixe 11.

Ce panneau mobile 12 comporte notamment une portion vitrée 122 et un cadre 121.

Des rails de guidage, respectivement un rail supérieur 114 et un rail inférieur 115, sont rapportés par collage sur la face de la partie fixe 11 orientée vers l'intérieur du véhicule.

On note que ces rails sont éloignés du contour de la partie fixe 11, et ne participent pas, ni ne nuisent, à la solidarisation de celle-ci au bord de la baie.

Les rails 114 et 115, qui sont sensiblement parallèles dans cet exemple, maintiennent et guident en coulissement le panneau mobile 12, qui présente un cadre 121 solidaire des rails 114, 115.

Le panneau mobile 12 peut être déplacé le long des rails 114, 115, dans un plan de coulissement sensiblement parallèle au plan défini par la partie fixe 11.

Le panneau mobile 12 peut venir obturer complètement l'ouverture de la partie fixe 11 (figure 1) ou libérer partiellement ou totalement cette ouverture.

Ainsi, le panneau mobile 12 peut prendre une ou plusieurs positions d'ouverture, selon sa position par rapport aux rails 114, 115.

Par ailleurs, le panneau mobile 12 peut se déplacer perpendiculairement au plan défini par la partie fixe 11, de façon à venir obturer l'ouverture, dans une position fermée (figure 1), dans laquelle elle affleure avec cette partie fixe 11, de façon à proposer un ensemble affleurant (carrosserie 10, partie fixe 11 et partie mobile 12).

La face de la partie fixe 11 tournée vers l'intérieur du véhicule porte par ailleurs un joint d'étanchéité (non représenté sur la figure 1) collé sur le contour de l'ouverture, dont l'extrémité de la lèvre vient prendre appui sur le panneau mobile 12, lorsque celui-ci est en position d'obturation.

Dans une variante, le joint d'étanchéité peut être monté sur le cadre 121 du panneau mobile 12, pour venir en contact avec la partie fixe 11.

Le rail supérieur 114 porte une navette supérieure 2 (illustrée plus en détail sur la figure 5) et le rail inférieur 115 porte une navette inférieure 3 (illustrée plus en détail sur les figures 6 à 8), chacune des navettes portant deux gorges, ou pistes, situées au voisinage respectivement de chaque bord latéral du panneau mobile 12 et coopérant avec un pion avant et arrière solidaire d'un bord du panneau mobile 12.

Chaque navette 2, 3 est ainsi guidée en coulissement dans un rail 114, 115, selon un axe parallèle à l'axe X, c'est-à-dire l'axe correspondant à la longueur du véhicule.

Les différents mouvements du panneau mobile 12 sont contrôlés à partir de moyens de mise en mouvement des navettes 2, 3 à l'intérieur des rails de guidage 114, 115.

Le mouvement de la navette inférieure 3 le long du rail de guidage inférieure 115 est assuré par le biais d'un câble de commande, ou câble d'entrainement, 13 de type "push pull", lui-même entrainé par des moyens motorisés commandés par un utilisateur.

Plus précisément, le câble d'entrainement 13 est destiné à pousser sur la navette inférieure 3 (dans une direction inverse à l'axe X, c'est-à-dire vers l'arrière du véhicule) pour déplacer le panneau mobile 12 de sa position fermée vers l'une des positions ouvertes et pour tirer la navette inférieure 3 (dans une direction conforme à l'axe X, c'est-à-dire vers l'avant du véhicule) pour déplacer le panneau mobile 12 d'une position ouverte vers sa position fermée.

Le câble d'entrainement 13 est, dans cet exemple, poussé ou tiré par un moteur (non illustré).

Le mouvement de la navette supérieure 2 le long du rail de guidage supérieur 114 est synchronisé au mouvement de la navette inférieure 3 par le biais de moyens de synchronisation se présentant, dans cet exemple, sous la forme de deux câbles de synchronisation (visibles sur la figure 13, notamment). On pourrait envisager de remplacer les câbles par des fils, des sangles ou bien des courroies, notamment.

Plus précisément, les navettes 2, 3 sont reliées entre elles par un câble de synchronisation avant 41 et un câble de synchronisation arrière 42.

La **figure 2** illustre partiellement le rail supérieur 114 du dispositif d'obturation selon la technique proposée. Le rail supérieur 114 est un rail classique qui comprend une paroi de fond et deux parois latérales s'étendant perpendiculairement à la paroi de fond. L'autre extrémité des parois latérales présente un court retour permettant de recevoir et maintenir la navette supérieure 2.

Le rail supérieur 114 est donc apte à recevoir la navette supérieure 2 de sorte à ce que cette dernière puisse coulisser longitudinalement dans le rail 114 selon l'axe X. De plus, le rail supérieur 114 ne prévoit aucune encoche faisant obstacle à la fermeture ou l'ouverture du panneau mobile 12. Ainsi, le rail 114 est simple et peu coûteux à fabriquer.

La **figure 3** illustre partiellement le rail inférieur 115 du dispositif d'obturation selon la technique proposée. Le rail inférieur 115 comprend une paroi de fond et deux parois latérales s'étendant perpendiculairement à la paroi de fond. La paroi latérale située du côté du véhicule comprend un retour 116 qui s'étend perpendiculaire à cette dernière et vers l'intérieur du véhicule. Le retour 116 présente deux encoches, à savoir une encoche avant 117a et une encoche arrière 117b, aptes à recevoir respectivement un pion porté par le panneau mobile 12 lorsque ce dernier est en position fermée.

La **figure 4** illustre la butée avant 118 du rail inférieur 115 du dispositif d'obturation selon la technique proposée. La butée avant 118 comprend un corps présentant une forme complémentaire au rail inférieur 115 de sorte à pouvoir être insérée dans l'extrémité avant du rail inférieur 115, c'est-à-dire l'extrémité du rail situé vers l'avant du véhicule. Le corps de la butée avant 118 comprend une rainure, ou encoche, 119 présentant une forme courbe, sensiblement en virgule, dont l'extrémité ou fond est positionné(e) en regard de l'encoche avant 117a du rail inférieur 115 lorsque la butée avant 118 est insérée dans le rail inférieur 115.

La **figure 5** illustre schématiquement la navette supérieure 2 selon une vue de dessous. La navette supérieure 2 se présente sous la forme d'un barreau de dimensions adaptées pour coulisser dans le rail de guidage supérieur 114 et présente des pistes avant et arrière aptes à coopérer avec des pions portés par le panneau mobile 12.

Plus précisément, la navette supérieure 2 comprend, une piste, dite piste avant, 21 qui contrôle le déplacement de la partie distale du panneau mobile 12 (la partie du panneau la plus proche de l'avant du véhicule) et une piste, dite piste arrière, 22 qui contrôle le déplacement de la partie proximale de ce même panneau mobile 12, opposée à la partie distale.

La navette supérieure 2 comprend également des éléments de solidarisation 23, 24 des câbles de synchronisation 41, 42. Ces câbles de synchronisation seront décrits plus en détails dans la suite de cette description.

Les **figures 6** à **8** illustrent la navette inférieure 3 selon une vue de face, une vue de derrière et une vue de dessous respectivement.

La navette inférieure 3 se présente sensiblement sous la forme d'un barreau de dimensions adaptées pour coulisser dans le rail de guidage inférieur 115 et présente des pistes avant et arrière aptes à coopérer avec des pions portés par le panneau mobile 12.

Plus précisément, la navette inférieure 3 comprend, une piste, dite piste avant, 31 qui contrôle le déplacement de la partie distale du panneau mobile 12 (la partie du panneau la plus proche de l'avant du véhicule) et une piste, dite piste arrière, 32 qui contrôle le déplacement de la partie proximale de ce même panneau mobile 12, opposée à la partie distale.

Dans cet exemple, les pistes des navettes supérieure 2 et inférieure 3 présentent des formes sensiblement identiques. Bien évidemment, de nombreuses variantes de formes de pistes peuvent être envisagées en fonction du guidage souhaité du cadre 121 du panneau mobile 12 par rapport aux navettes 2, 3. Des formes différentes permettent notamment de choisir quel bord du panneau mobile 12 doit être louvoyé en premier lors de l'ouverture du panneau mobile 12.

Comme illustré sur les figures 5 à 8, les pistes avant 21, 31 des navettes supérieure 2 et inférieure 3 comprennent une première portion rectiligne 211, 311 s'étendant parallèlement à l'axe de coulissement. Cette première portion rectiligne 211, 311, positionnée à proximité du bord de la navette orienté vers l'extérieur du véhicule, correspond à la position d'obturation du bord avant du panneau mobile 12.

Les navettes 2, 3 comprennent également une portion inclinée 212, 312 qui forme, par rapport à cet axe de coulissement, un angle α compris environ entre 25° et 50°. De préférence, cette portion 212, 312 inclinée présente un angle d'environ 45° et permet de contrôler le changement de position du bord avant du panneau mobile 12.

La portion inclinée 212, 312 est prolongée par une deuxième portion rectiligne 213, 313 s'étendant parallèlement à l'axe de coulissement. Cette deuxième portion rectiligne 213, 313, positionnée à proximité du bord de la navette orienté vers l'intérieure du véhicule, correspond à la position de dégagement du bord avant du panneau mobile 12 par rapport au panneau fixe 11.

Les pistes arrière 22, 32 présentent, dans cet exemple, des formes sensiblement identiques aux pistes avant 21, 31. Ainsi, elles comprennent une première portion rectiligne 221, 321 correspondant à la position d'obturation du bord arrière du panneau mobile 12, une portion inclinée 222, 322 qui forme, par rapport à cet axe de coulissement, un angle α compris environ entre 25° et 50°. De préférence, cette portion 222, 322 inclinée présente un angle d'environ 45° et permet de contrôler le changement de position du bord arrière du panneau mobile 12.

La portion inclinée 222, 322 est prolongée par une deuxième portion rectiligne 223, 323 s'étendant parallèlement à l'axe de coulissement. Cette deuxième portion rectiligne 223, 323, positionnée à proximité du bord de la navette orienté vers l'intérieure du véhicule, correspond à la position de dégagement du bord arrière du panneau mobile 12 par rapport au panneau fixe 11.

Ainsi, quatre pistes au total sont mises en oeuvre dans les navettes 2, 3 (et non pas dans les rails 114, 115), dont deux pistes avant 21, 31 et deux pistes arrière 22, 32.

D'autres angles, et le cas échéant des formes légèrement différentes, par exemple incurvées, peuvent être envisagées pour les pistes 21 ,22, 31 et 32.

Par ailleurs, la navette inférieure 3 comprend une première protubérance 33 située sensiblement en regard de la piste arrière 32 et configurée pour permettre une solidarisation du câble de synchronisation arrière 42 sur la navette inférieure 3.

Selon le deuxième mode de réalisation, la protubérance 33 constitue également un élément/point de solidarisation de moyens de mise sous tension 52 des câbles de synchronisation 41, 42.

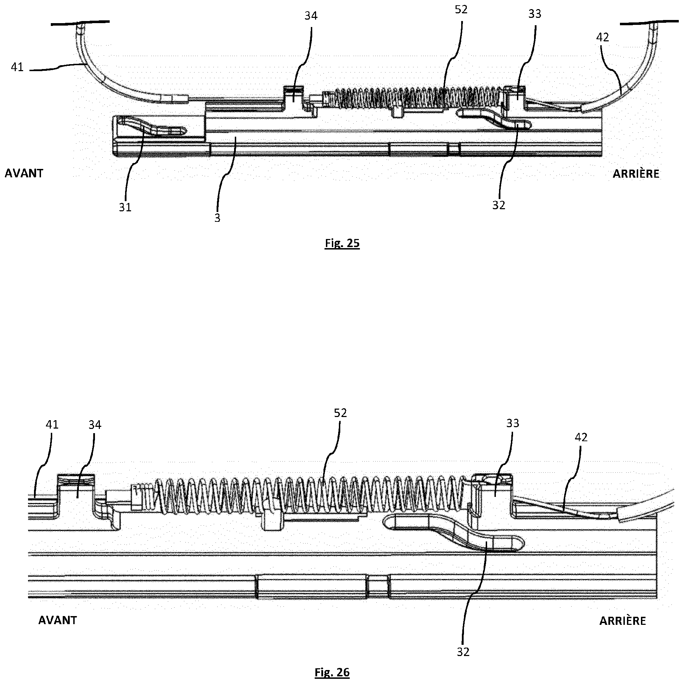

Comme illustré sur les figures 25 et 26, les moyens de mise sous tension des câbles de synchronisation 41, 42 se présentent sous la forme d'un ressort de rattrapage des jeux 52. Le deuxième mode de réalisation de la présente technique est décrit en relation avec cette implémentation particulière.

Il est à noter que l'on peut envisager, lors du montage, de mettre les câbles de synchronisation 41, 42 sous tension et de les maintenir en position par vissage, clippage, sertissage ou par tout autre moyen permettant d'atteindre le même résultat, c'est-à-dire de rattraper les jeux des câbles de synchronisation 41, 42. Ces solutions peuvent donc se substituer à la mise en oeuvre du ressort de rattrapage des jeux 52.

La navette inférieure 3 comprend également une deuxième protubérance 34 se présentant sensiblement sous la forme d'une fourche. Cette fourche 34 est située sensiblement au niveau du tiers avant de la navette inférieure 3 et est configurée pour permettre le passage et le guidage du câble de synchronisation avant 41 et, le cas échéant, pour venir en appui contre le ressort de rattrapage des jeux 52, comme expliqué en détail dans la suite de cette description.

La **figure 10** illustre une vue de dessous du panneau mobile 12 sur laquelle la navette inférieure 3 et le câble d'entrainement 13 sont illustrés. Dans cet exemple, le câble d'entrainement 13 est clippé ou encliqueté sur l'élément de solidarisation 35 de la navette inférieure 3 (visible sur les figures 6 et 8 notamment). D'autres solutions de solidarisation du câble d'entrainement 13 sur la navette inférieure 3 sont envisageables.

La **figure 11** illustre une vue de dessus du panneau mobile 12 du dispositif d'obturation selon la technique proposée. Sur cette figure, la navette supérieure 2 n'est pas représentée tandis que les câbles de synchronisation 41, 42 sont illustrés.

La **figure 12** illustre une vue de dessus du panneau mobile 12 sur laquelle la navette supérieure 2 est illustrée.

Dans l'exemple illustré sur les figures 10 à 12, le cadre 121 du panneau mobile 12 porte deux pions de guidage supérieurs 123 et deux pions de guidage inférieurs 124 prévus pour coopérer avec une piste correspondante formée respectivement dans les navettes 2 et 3 du rail supérieur 114 et du rail inférieur 115, pour contrôler la fermeture et l'ouverture du panneau mobile 12, c'est-à-dire son déplacement dans une direction perpendiculaire à l'axe de coulissement (classiquement l'axe Y du véhicule, correspondant à sa largeur).

Un pion de guidage inférieur 124 est ainsi solidaire de la partie distale du bord inférieur du panneau mobile 12 et un autre pion de guidage inférieur 124 est solidaire de la partie proximale du bord inférieur du panneau mobile 12, opposée à la partie distale.

De la même manière, un pion de guidage supérieur 123 est ainsi solidaire de la partie distale du bord supérieur du panneau mobile 12 et un autre pion de guidage supérieur 123 est solidaire de la partie proximale du bord supérieur du panneau mobile 12, opposée à la partie distale.

Les pions supérieurs 123 et inférieurs 124 du panneau mobile 12 se déplacent alors dans les pistes avant et arrière des navettes supérieure 2 et inférieure 3.

La **figure 13** illustre une vue partielle du panneau mobile du dispositif d'obturation montrant le cheminement des câbles de synchronisation 41, 42 de la navette inférieure 3 jusqu'à la navette supérieure 2 à travers le cadre 121 du panneau mobile 12. Comme indiqué précédemment, dans ce deuxième mode de réalisation, le ressort de rattrapage des jeux 52 est fixé sur la navette inférieure 3 au niveau de la protubérance 33.

Les câbles de synchronisation 41, 42 relient donc les navettes supérieure 2 et inférieure 3 entre elles de sorte à assurer un déplacement optimal des navettes, et donc du panneau mobile 12, lorsque le câble d'entrainement 13 est actionné.

La **figure 14** illustre une vue partielle du panneau mobile du dispositif d'obturation montrant la navette inférieure 3 ainsi que les câbles de synchronisation 41, 42 et le ressort de rattrapage des jeux 52. Sur la figure 14, la solidarisation du ressort de rattrapage des jeux 52 sur la protubérance 33 n'est pas illustrée pour ce deuxième mode de réalisation. Il est donc nécessaire de se référer aux figures 25 et 26 qui illustrent clairement cet aspect.

Comme illustré, le câble de synchronisation avant 41 est reçu et guidé à travers la fourche 34 et est solidarisé sur l'extrémité avant du ressort de rattrapage des jeux 52, comme illustré sur la **figure 15****.**

Plus précisément, la fourche 34 est positionnée à quelques millimètres de l'extrémité du ressort de rattrapage des jeux 52 sur laquelle le câble de synchronisation avant 41 est solidarisé. De préférence, la fourche est située environ entre 1 et 5 mm de l'extrémité du ressort de rattrapage des jeux 52. Préférentiellement, la distance entre la fourche 34 et l'extrémité du ressort de rattrapage des jeux 52 est d'environ 3 mm. En fonctionnement dit « normal » du dispositif 1, la distance entre la fourche 34 et l'extrémité du ressort de rattrapage des jeux 52 est constante.

Un jeu est donc prévu entre la fourche 34 et le ressort de rattrapage des jeux 52 et correspond sensiblement à la tolérance d'allongement, ou tolérance de fabrication, du câble de synchronisation avant 41.

Les **figures 16 et 17** illustrent une vue partielle du panneau mobile du dispositif d'obturation montrant le rail supérieur 114, la navette supérieure 2 ainsi que les pions 123 du panneau mobile 12, respectivement en position fermée et en position ouverte de dégagement.

Les **figures 18 et 19** illustrent une vue partielle du panneau mobile du dispositif d'obturation montrant le rail inférieur 115, la navette inférieure 3 ainsi que les pions 124 du panneau mobile 12, respectivement en position fermée et en position ouverte de dégagement.

Les **figures 22 à 24** illustrent respectivement le déplacement des pions 124, de la navette inférieure 3 et du panneau mobile 12 entre la position fermée et la position ouverte de dégagement.

Comme illustré sur la figure 16, les pions 123 portés par le bord supérieur du panneau mobile 12 sont, dans la position d'obturation ou fermée du panneau mobile 12, en butée à l'extrémité fermée de la première portion rectiligne 211, 221 de la piste avant 21 et de la piste arrière 22.

De la même façon, et comme illustré sur la figure 18, les pions 124 portés par le bord inférieur du panneau mobile 12 sont, dans la position d'obturation ou fermée du panneau mobile 12, en butée à l'extrémité fermée de la première portion rectiligne 311, 321 de la piste avant 31 et de la piste arrière 32.

En position d'obturation ou fermée du panneau mobile 12, les pions 124 portés par le bord inférieur du panneau mobile 12 sont reçus dans les encoches 117a, 117b du rail inférieur 115 de sorte à immobiliser/maintenir le panneau mobile 12 dans cette position. Cette position des pions 124 est également visible sur la figure 22.

Dans la position d'obturation du panneau mobile 12, le ressort de rattrapage des jeux 52, qui est un ressort fonctionnant en traction, est en extension.

Sur les figures 19 et 23, la navette inférieure 3 s'est déplacée de la droite (avant du véhicule) vers la gauche (arrière du véhicule) comme illustré par la flèche F1 horizontale. Ce premier déplacement F1, correspondant à la première phase d'ouverture, s'effectue sur une distance d'environ 30mm, à savoir une distance sensiblement équivalente à la longueur des pistes des navettes 2 et 3, dans cet exemple.

Ainsi, les pions 124 coopérants avec les pistes avant 31 et arrière 32 de la navette inférieure 3 se sont déplacés le long de la première portion rectiligne 311, 321 puis dans la portion inclinée 312, 322.

Les pions 124 se sont donc extrait des encoches 117a, 117b du rail inférieur 115 de sorte à décaler immédiatement et progressivement selon l'axe Y le bord inférieur du panneau mobile 12 (comme illustré sur la figure 24) entrainant ainsi son louvoiement.

Le déplacement de la navette inférieure 3 selon la flèche F1 de la figure 19 (première phase d'ouverture) entraine tout d'abord un déplacement d'une course identique (à savoir 30mm) de la navette supérieure 2 dans le sens opposé (selon la flèche F2 de la figure 17, correspondant à la deuxième phase d'ouverture) à cause de la tension des câbles de synchronisation 41, 42.

En effet, sous l'effet du déplacement de la navette inférieure 3 vers l'arrière du véhicule, le câble de synchronisation arrière 42 va se détendre tandis que la tension du ressort de rattrapage des jeux 52 ajoutée à la tension du câble de synchronisation avant 41 va tirer la navette supérieure 2 vers l'avant du véhicule (dans le sens opposé donc).

De cette manière, lors de ce mouvement de la navette supérieure 2 selon la flèche F2 (vers l'avant du véhicule), les pions 123 se déplacent dans les pistes 21, 22 de la navette supérieure 2, de la portion rectiligne 211 jusqu'à la portion rectiligne opposée 213, afin de permettre un louvoiement du bord supérieur du panneau mobile 12.

En poursuivant le déplacement de la navette inférieure 3, selon la flèche F3, vers l'arrière du véhicule, le câble de synchronisation arrière 42 va se tendre jusqu'à ce que la tension des câbles 41, 42 soit à l'équilibre. Une fois l'équilibre des tensions atteint entre les câbles de synchronisation 41, 42 et au niveau du ressort de rattrapage des jeux 52, le déplacement de la navette inférieure 3 va entrainer un déplacement du panneau mobile 12. Cet équilibre des tensions permet également un déplacement synchronisé de la navette supérieure 2 avec la navette inférieure 3 (selon la flèche F3, correspondant à la troisième phase d'ouverture), c'est-à-dire vers l'arrière du véhicule.

Dans cet exemple, la cinématique permet donc un louvoiement successif du bord inférieur puis du bord supérieur du panneau mobile 12. C'est donc le bord inférieur du panneau mobile 12 qui se décale en Y, puis le bord supérieur à partir de la position d'obturation du panneau mobile 12.

Bien évidemment, et selon la forme des pistes 21, 22 ,31 ,32 il est possible d'obtenir un louvoiement successif du bord avant puis du bord arrière ou tout autre mouvement.

Ainsi, le joint d'étanchéité ne se décolle pas simultanément sur l'ensemble du bord du panneau mobile. En cas de gel, le joint d'étanchéité est donc décollé progressivement de sorte à ne pas induire d'efforts excessifs de la part du moteur pour ouvrir la vitre portant le joint d'étanchéité. De cette manière, les risques de dégradation du joint d'étanchéité ou du mécanisme d'ouverture de la vitre sont minimisés.

On peut par une consigne électronique arrêter le moteur (et donc le déplacement des navettes supérieure 2 et inférieure 3) dans cette position intermédiaire/ouverte de dégagement.

Lorsque le moteur continue de pousser (vers l'arrière du véhicule) la navette inférieure 3 (et la navette supérieure 2 via les câbles de synchronisation 41, 42), les pions 123, 124 coopérant avec les pistes avant 21, 31 et arrière 22, 32 sont en butée dans les deuxièmes portions rectilignes 213, 223, 313, 323.

Ainsi, les pions 123, 124 portés par panneau mobile 12 sont, dans la position intermédiaire de dégagement, en butée à l'extrémité fermée de la deuxième portion rectiligne 213, 223, 313, 323, comme illustré sur les figures 17 et 19.

Sur ces figures, le dégagement du panneau mobile est terminé. Le panneau mobile 12 est dans une position intermédiaire de dégagement, c'est-à-dire qu'il se retrouve dans le plan de coulissement, parallèle à la vitre fixe 11, et en face de l'ouverture ménagée dans cette dernière.

Une fois l'ensemble du panneau mobile 12 décalé en Y, le déplacement des navettes 2, 3 de la droite vers la gauche entraîne le coulissement en X du panneau mobile 12, dans le plan de coulissement, de la droite vers la gauche.

Le panneau mobile 12 peut ainsi coulisser le long des rails 114, 115 jusqu'à une position extrême dite d'ouverture maximale.

Par une consigne électronique, le moteur et le panneau mobile 12 coulissant peuvent s'arrêter dans une position intermédiaire de coulissement, ou position intermédiaire d'ouverture quelconque.

Le mouvement du panneau mobile 12 par rapport à la partie fixe 11 peut donc se décomposer en deux déplacements indépendants :
- un déplacement perpendiculaire vers l'intérieur du véhicule en deux temps par rapport au plan formé par la partie fixe 11, permettant le passage d'une position fermée et verrouillée, dans laquelle le panneau mobile 12 se trouve dans le même plan que la partie fixe 11 et l'ouverture, à une position intermédiaire de dégagement, dans laquelle le panneau mobile 12 est décalé par rapport à la partie fixe 11 en regard de l'ouverture et dégagé de celle-ci, dans un plan de coulissement, de façon à permettre ce coulissement - le panneau mobile 12 est ainsi mobile selon une direction de dégagement perpendiculaire à la direction de coulissement;
- un déplacement dans le plan de coulissement, parallèle au plan formé par la partie fixe 11.

Le passage de la position intermédiaire de dégagement à la position d'obturation se fait de façon symétrique.

Ainsi, le moteur déplace les navettes de la gauche vers la droite et une fois le panneau mobile 12 situé en regard de l'ouverture, le panneau mobile 12 se décale en Y jusqu'à ce que les pions 124 coopèrent avec les encoches 117a, 117b du rail inférieur 115.

Plus précisément, et de façon similaire à l'ouverture, lorsque la navette inférieure 3 est déplacée vers l'avant du véhicule afin de déplacer le panneau mobile 12 vers la position d'obturation, le déplacement de la navette inférieure 3 vers l'avant (première phase de fermeture) entraine un déplacement dans le sens opposé (vers l'arrière du véhicule, correspondant à la deuxième phase de fermeture) de la navette supérieure 2 du fait de la tension du câble de synchronisation arrière 42.

Lorsque les tensions dans les câbles de synchronisation et dans le ressort de rattrapage des jeux 52 sont à l'équilibre, la navette supérieure 2 se déplace alors dans le même sens que la navette inférieure 3 (troisième phase de fermeture) pour permettre la fermeture de la baie.

La navette inférieure 3 est entrainée jusqu'à ce que les pions 124 coopèrent avec les encoches 117a, 117b du rail inférieur 115. Pour ce faire, l'embout 118 (illustré sur la figure 4) d'extrémité avant du rail inférieur 115 présente une rainure 119 en virgule qui permet de guider le pion avant 124 porté par le bord inférieur du panneau mobile 12 dans l'encoche 117a du rail inférieur 115.

Comme indiqué précédemment, le deuxième mode de réalisation de la technique proposée met en oeuvre un ressort de rattrapage des jeux 52 qui est un ressort fonctionnant en traction qui exerce une force (d'environ 40 à 50N, par exemple) sur le câble de synchronisation avant 41 de sorte rattraper les jeux et les défauts de tension dans les câbles de synchronisation 41, 42 lors des déplacements des navettes 2, 3.

Ainsi, le ressort de rattrapage des jeux 52 présente l'avantage d'absorber/compenser la tolérance des câbles de synchronisation 41, 42 lors des déplacements de la navette inférieure 3 de sorte à optimiser le déplacement coordonné/synchronisé de la navette supérieure 2 avec la navette inférieure 3.

De cette manière, le ressort de rattrapage des jeux 52 permet aussi, lorsqu'il y a des appuis multiples sur la commande du moteur (commandes d'ouverture et de fermeture successives et dans un lapse de temps très faible), d'absorber les à-coups du moteur et ainsi d'éviter les éventuels frottements des pions 124 sur le retour 116 du rail inférieur 115.

De cette manière les détériorations du rail inférieur 115 (usure, bruit, changement de couleur), du panneau mobile 12 et du panneau fixe 11 sont évitées. Par ailleurs, les contacts non souhaités entre le panneau mobile 12 et le panneau fixe sont également évités.

Dans cet exemple, le ressort de rattrapage des jeux 52 est mis en oeuvre sur le câble de synchronisation avant 41. Il peut évidemment être mis en oeuvre sur le câble de synchronisation arrière 42. L'extrémité solidaire du ressort de rattrapage des jeux 52 peut également être modifiée sans altérer les effets de ce ressort.

Par ailleurs, le deuxième mode de réalisation met en oeuvre, au sein d'une des pistes des navettes supérieure 2 ou inférieure 3, un clip de maintien 40 d'un pion de guidage 123, 124 en position ouverte.

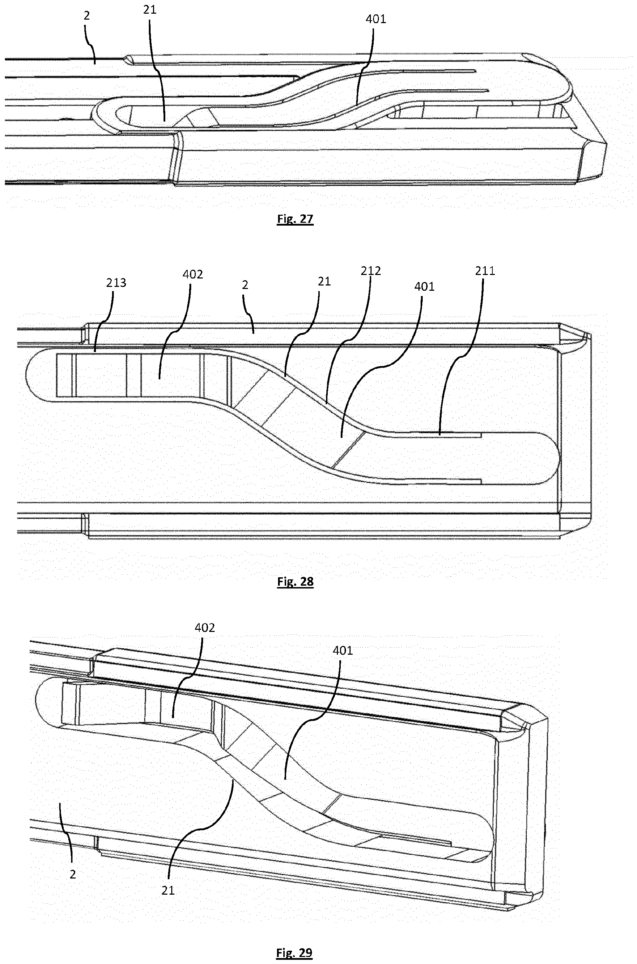

Ce clip de maintien 40 en position ouverte est illustré sur les **figures 27 à 31****.**

Le clip de maintien 40 est un élément déformable mis en oeuvre, dans cet exemple, au sein de la piste avant 21 de la navette supérieure 2. Bien évidemment, ce clip de maintien peut être mis en oeuvre dans la piste arrière de la navette supérieure 2. Il peut également être mis en oeuvre dans l'une des pistes de la navette inférieure 3. En outre, un clip de maintien 40 peut également être mis en oeuvre dans plusieurs des pistes des navettes 2, 3.

Plus précisément, le clip de maintien 40 comprend une première portion 401 qui s'étend de la première portion rectiligne 211 jusqu'au début de la deuxième portion rectiligne 213. Cette première portion 401 est inclinée depuis le bord supérieur de la première portion rectiligne 211 sensiblement jusqu'au fond de la piste au niveau du début de la deuxième portion rectiligne 213 de la piste 21.

Le clip de maintien 40 comprend une deuxième portion 402 qui prolonge la première portion 401 au niveau de la deuxième portion rectiligne 213 de la piste 21. Cette deuxième portion 402 se présente sous la forme d'une cuvette ou d'une gorge apte à recevoir et maintenir le pion de guidage 123 du cadre 121 du panneau mobile 12 lorsque ce dernier se situe en position ouverte.

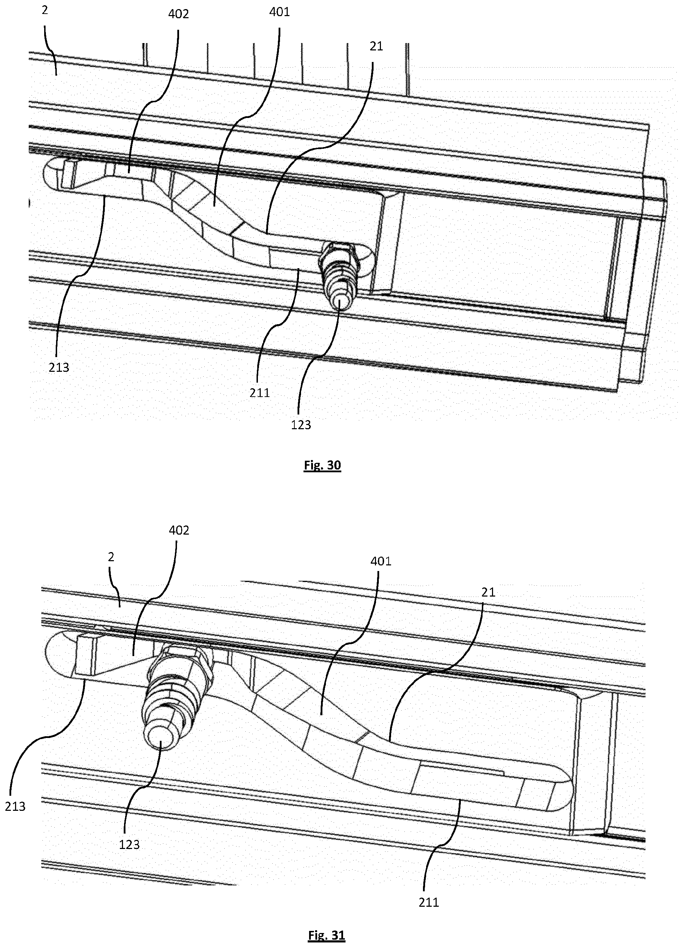

La **figure 30** illustre le pion de guidage 123 dans la piste avant 21 de la navette supérieure 2 lorsque le panneau mobile 2 (non illustré) se trouve en position fermée. Dans cette position, le pion 123 se situe à l'extrémité de la portion 401 du clip de maintien 40 située dans la première portion rectiligne 211 de la piste. On note que, dans cette position, le pion 123 déforme le clip de maintien en l'enfonçant vers le fond de la piste 21.

En référence à la description de l'ouverture du panneau mobile faite précédemment, lors de la deuxième phase d'ouverture du panneau mobile 12 (déplacement selon la flèche F2), le pion 123 est déplacé dans la piste 21 de la navette supérieure 2, sur la première portion 401 du clip de maintien 40, jusqu'à venir en butée dans la deuxième portion rectiligne 213 (comme illustré sur la **figure 31**).

En arrivant en butée dans la deuxième portion rectiligne 213, le pion de guidage 123 est reçu dans la gorge de la deuxième portion 402.Cette gorge 402 permet au clip 40 de reprendre une position normale. C'est-à-dire que le clip de maintien 40 va s'éloigner du fond de la piste 21. De cette manière, le pion de guidage 123 est maintenu en butée dans la deuxième portion rectiligne 213.

Le clip de maintien 40 de la technique proposée exerce donc un effort pour maintenir la position ouverte afin que les pions 123, 124 portés par le cadre du panneau mobile 12 soient maintenus au fond des pistes 21, 22, 31, 32 des navettes 2 et 3, et plus précisément au niveau des portions 213, 223, 313 et 323 (comme illustré sur les figures 17 et 23 notamment).

Ainsi, en cas de frottement ou autres phénomène dynamique non souhaités, la force du clip de maintien 40 permet d'éviter toute tentative de fermeture manuelle par un utilisateur alors que le panneau mobile 12 n'est pas en face de l'ouverture, c'est-à-dire lorsque les pions 124 ne sont pas en face des encoches 117a, 117b.

En d'autres termes, le clip de maintien 40 empêche un mouvement du cadre 121 du panneau mobile 12 par rapport aux rails de guidage 114, 115 lorsque le panneau mobile 12 est en position ouverte.

Par ailleurs, les pions 124 présentent un jeu selon l'axe Y suffisant avec le rail 115 pour éviter tout frottement de sorte à éviter toute détérioration de ce dernier (usure, changement de couleur ou bruit lors de l'ouverture/fermeture du panneau mobile).

Selon la technique proposée, la navette inférieure 3 comprend une fourche 34 située sensiblement au niveau du tiers avant de la navette inférieure 3 et configurée pour permettre le passage du câble de synchronisation avant 41 et guider ce dernier.

Plus précisément, la fourche 34 se situe à quelques millimètres de l'extrémité du ressort de rattrapage des jeux 52 recevant le câble de synchronisation avant 41.

Dans cet exemple, la distance entre la fourche 34 et l'extrémité du ressort de rattrapage des jeux 52 est d'environ 3 mm, ce qui correspond sensiblement à la tolérance des câbles de synchronisation 41, 42.

De cette manière, lors d'une situation non souhaitée, par exemple en cas de gel faisant que le panneau mobile 12 reste collé au joint d'étanchéité du panneau fixe 11 ou en présence d'un obstacle à la fermeture, la fourche 34 peut assister le ressort de rattrapage des jeux 52 pour permettre l'ouverture de la baie.

Plus précisément, dans une situation normale d'utilisation, lorsque le câble d'entrainement 13 est actionné pour déplacer le panneau mobile 12 vers la position ouverte, le ressort de rattrapage des jeux 52 va tirer sur le câble de synchronisation avant 41 afin de déplacer la navette supérieure 2. Dans cette situation, dite « normale », la distance entre l'extrémité du ressort de rattrapage des jeux 52 et la fourche 34 reste identique, à savoir d'environ 3mm.

Toutefois, lors d'une situation anormale, le ressort de rattrapage des jeux 52 ne va pas être suffisamment puissant pour permettre le déplacement de la navette supérieure 2, et cela à cause de l'obstacle ou du gel.

Ainsi, la navette inférieure 3 va se déplacer de quelques millimètres, ce qui correspond à la distance entre la fourche 34 et le ressort de rattrapage des jeux 52 jusqu'à ce que la fourche 34 vienne en contact/appui sur l'extrémité du ressort de rattrapage des jeux 52.

C'est alors la fourche 34 qui va directement pousser sur l'extrémité du ressort de rattrapage des jeux 52 de sorte à assister ce dernier pour déplacer la navette supérieure 2. En d'autres termes, la force du moteur exercée sur la navette inférieure 2 via le câble d'entrainement 13 est directement transmise par la fourche 34 sur le câble de synchronisation avant 41 afin de déplacer la navette supérieure 2. La fourche 34 se substitue donc au ressort de rattrapage des jeux 52 lorsque ce dernier n'est pas suffisamment puissant pour déplacer la navette supérieure 2.

Dans le cas d'une situation anormale, deux situations sont possibles lorsque la fourche 34 entraine le câble de synchronisation 41, à savoir :
- la force du moteur transmise directement sur la fourche 34 est suffisante pour débloquer le panneau mobile 12 (décoller le joint d'étanchéité ou surpasser l'obstacle, par exemple) et permettre l'ouverture du panneau mobile 12,
- la force du moteur transmise directement sur la fourche 34 n'est pas suffisante et une détection électronique de surchauffe du moteur permet un arrêt de ce dernier avant que le panneau mobile 12 n'entre en collision avec le panneau fixe 11.

### Autres aspects et variantes

Dans un autre mode de réalisation non illustré, pour chaque rail de guidage, chaque navette comprend deux pions fixes aptes à coopérer avec deux gorges portées par un bord dudit panneau mobile.

Ainsi, pour le rail supérieur, la navette correspondante porte deux pions fixes aptes à coopérer avec deux gorges portées par le bord supérieur du panneau mobile. Pour le rail inférieur, la navette correspondante porte deux pions fixes aptes à coopérer avec deux gorges portées par le bord inférieur du panneau mobile.

Les modes de réalisation décrits ci-dessus s'appliquent à une paroi latérale d'un véhicule automobile.

La technique proposée peut s'appliquer de la même façon à d'autres structures présentant une paroi dans laquelle est définie une baie, comme, par exemple, une caravane ou un camping-car.

Notamment, la baie peut être formée dans une paroi latérale du véhicule (par exemple pour les véhicules utilitaires, les monospaces, les breaks,...), dans une paroi orientée vers l'arrière du véhicule (par exemple pour les « pick-up »), ou encore dans une portière.

Il peut également s'agir d'une baie de séparation d'un véhicule.

## Revendications

1. Dispositif d'obturation (1) d'une baie ménagée dans une structure, comprenant une partie fixe (11), dans laquelle est définie une ouverture, et au moins un panneau mobile (12) coulissant guidé le long de deux rails (114, 115) de guidage montés sur une face dudit panneau fixe (11), entre une position de fermeture, obturant ladite ouverture, dans un premier plan défini par ledit panneau fixe (11), dit plan d'obturation, et au moins une position d'ouverture, dans un second plan, dit plan de coulissement, sensiblement parallèle audit plan d'obturation, chacun desdits rails (114, 115) de guidage portant au moins une navette (2, 3) guidée en translation dans ledit rail (114, 115), chaque navette (2, 3) comprenant deux pistes de guidage (21, 22, 31, 32) ou deux pions fixes (123, 124) aptes à coopérer respectivement avec deux pions fixes (123, 124) ou deux pistes de guidage (21, 22, 31, 32) porté(e)s par ledit panneau mobile (12),
ledit dispositif d'obturation (1) comprenant en outre des moyens d'actionnement (13) agissant sur une desdites navettes (3) pour assurer un déplacement en translation de ces dernières dans lesdits rails de guidage (114, 115), et le passage du panneau mobile (12) de ladite position d'obturation à ladite au moins une position de coulissement, et réciproquement,
ledit dispositif d'obturation (1) comprenant en outre des moyens de synchronisation (41, 42) du déplacement desdites navettes (2, 3), comprenant deux éléments de synchronisation (41,42),
**caractérisé en ce qu'**une extrémité d'un desdits éléments de synchronisation (41, 42) est reliée au cadre (121) dudit panneau mobile (12) par le biais d'un ressort de maintien (51) du panneau mobile (12) dans la position d'ouverture, les autres extrémités desdits éléments de synchronisation (41, 42) étant reliés à une desdites navettes (2, 3).

2. Dispositif d'obturation (1) d'une baie ménagée dans une structure, comprenant une partie fixe (11), dans laquelle est définie une ouverture, et au moins un panneau mobile (12) coulissant guidé le long de deux rails (114, 115) de guidage montés sur une face dudit panneau fixe (11), entre une position de fermeture, obturant ladite ouverture, dans un premier plan défini par ledit panneau fixe (11), dit plan d'obturation, et au moins une position d'ouverture, dans un second plan, dit plan de coulissement, sensiblement parallèle audit plan d'obturation, chacun desdits rails (114, 115) de guidage portant au moins une navette (2, 3) guidée en translation dans ledit rail (114, 115), chaque navette (2, 3) comprenant deux pistes de guidage (21, 22, 31, 32) ou deux pions fixes (123, 124) aptes à coopérer respectivement avec deux pions fixes (123, 124) ou deux pistes de guidage (21, 22, 31, 32) porté(e)s par ledit panneau mobile (12),
ledit dispositif d'obturation (1) comprenant en outre des moyens d'actionnement (13) agissant sur une desdites navettes (3) pour assurer un déplacement en translation de ces dernières dans lesdits rails de guidage (114, 115), et le passage du panneau mobile (12) de ladite position d'obturation à ladite au moins une position de coulissement, et réciproquement,
ledit dispositif d'obturation (1) comprenant en outre des moyens de synchronisation (41, 42) du déplacement desdites navettes (2, 3), comprenant deux éléments de synchronisation (41,42),
**caractérisé en ce que** chaque extrémité des éléments de synchronisation (41, 42) est reliée à une desdites navettes (2, 3), une extrémité d'un desdits éléments de synchronisation (41, 42) étant reliée à la navette (3) sur laquelle agissent les moyens d'actionnement (13) par le biais de moyens de mise sous tension (52) desdits éléments de synchronisation (41, 42), et **en ce qu'**il comprend en outre au moins un clip de maintien (40) du panneau mobile (12) en position ouverte disposé dans au moins une desdites pistes (21, 22, 31, 32) desdites navettes (2, 3).

3. Dispositif d'obturation (1) selon la revendication 2, **caractérisé en ce que** lesdits moyens de mise sous tension (52) desdits éléments de synchronisation (41, 42) se présentent sous la forme d'un ressort de rattrapage de jeux (52).

4. Dispositif d'obturation (1) selon l'une des revendications 1 à 3, **caractérisé en ce que** ledit ressort de maintien (51) et ledit ressort de rattrapage de jeux (52) sont des ressorts de traction.

5. Dispositif d'obturation (1) selon l'une des revendications 1 à 4, **caractérisé en ce que** chacun des éléments de synchronisation (41, 42) est logé dans une partie du cadre (121) du panneau mobile (12).

6. Dispositif d'obturation (1) selon l'une des revendications 1 à 5, **caractérisé en ce qu'**une première desdites navettes (2, 3) se déplace dans un premier sens et une deuxième desdites navettes (2, 3) se déplace dans sens opposé lors d'au moins une phase de la fermeture et/ou de l'ouverture du panneau mobile 12.

7. Dispositif d'obturation (1) selon la revendication 6, **caractérisé en ce que** le déplacement dans un premier sens de ladite première desdites navettes (3) assure le déplacement transversal par rapport auxdits rails (114, 115) d'une première partie du panneau mobile (12), et le déplacement, dans le sens opposé puis dans le même sens, de ladite deuxième desdites navette (2) assure le déplacement transversal par rapport auxdits rails (114, 115) de l'autre partie du panneau mobile (12), permettant le passage du panneau mobile (12) dans une position intermédiaire de dégagement, dans le plan de coulissement, en regard de l'ouverture et dégagé de celle-ci.

8. Dispositif d'obturation (1) selon l'une des revendications 1 à 7, **caractérisé en ce que** lesdits moyens d'actionnement (13) comprennent un câble d'entrainement motorisé agissant sur une desdites navettes (2, 3).

9. Dispositif d'obturation (1) selon l'une des revendications 1 à 8, **caractérisé en ce que** seul l'un desdits rails de guidage (114, 115) comprend des encoches (117a, 117b) de réception desdits pions (123, 124) fixes en position d'obturation du panneau mobile (12).

10. Dispositif d'obturation (1) selon l'une des revendications 1 à 9, **caractérisé en ce qu'**une desdites navettes (2, 3) comprend une fourche (34) située à proximité d'une extrémité dudit ressort de maintien (5) ou dudit ressort de rattrapage de jeux (52) et configurée pour venir en appui sur cette dernière lors du déplacement du panneau mobile (12) de la position fermée vers l'une desdites positions de coulissement.

11. Dispositif d'obturation (1) selon la revendication 10, **caractérisé en ce que** ladite fourche (34) constitue en outre un moyen de guidage d'un des éléments de synchronisation (41).

## Patentansprüche

1. Vorrichtung zum Verschließen (1) eines in eine Struktur eingelassenen Öffnungsfelds, umfassend einen feststehenden Teil (11), in dem eine Öffnung definiert ist, und mindestens ein bewegliches Schiebepaneel (12), das entlang zweier Führungsschienen (114, 115), die auf einer Seite des feststehenden Paneels (11) montiert sind, zwischen einer Schließposition, welche die Öffnung in einer ersten Ebene, die durch das feststehenden Paneel (11) definiert wird, Verschlussebene genannt, verschließt, und mindestens einer Öffnungsposition in einer zweiten Ebene, Gleitebene genannt, im Wesentlichen parallel zur Verschlussebene, geführt wird,
wobei jede der Führungsschienen (114, 115) mindestens einen Transportschlitten (2, 3) trägt, der in der Schiene (114, 115) verschieblich geführt ist, wobei jeder Transportschlitten (2, 3) zwei Führungsbahnen (21, 22, 31, 32) oder zwei feststehende Zapfen (123, 124) umfasst, die imstande sind, jeweils mit zwei feststehenden Zapfen (123, 124) oder zwei Führungsbahnen (21, 22, 31, 32), die von dem beweglichen Paneel (12) getragen werden, zusammenzuwirken,
wobei die Vorrichtung zum Verschließen (1) weiter Betätigungsmittel (13) umfasst, die auf die Transportschlitten (3) wirken, um für eine Verschiebebewegung dieser letzteren in den Führungsschienen (114, 115), und den Übergang des beweglichen Paneels (12) von der Verschlussposition in die mindestens eine Gleitposition und umgekehrt zu sorgen,
wobei die Vorrichtung zum Verschließen (1) weiter Mittel zum Synchronisieren (41, 42) der Bewegung der Transportschlitten (2, 3) umfasst, die zwei Synchronisierungselemente (41, 42) umfassen,
**dadurch gekennzeichnet, dass** ein Ende der Synchronisierungselemente (41, 42) anhand einer Haltefeder (51) des beweglichen Paneels (12) mit dem Rahmen (121) des beweglichen Paneels (12) in der Öffnungsposition verbunden ist, wobei die anderen Enden der Synchronisierungselemente (41, 42) mit einem der Transportschlitten (2, 3) verbunden sind.

2. Vorrichtung zum Verschließen (1) eines in eine Struktur eingelassenen Öffnungsfelds, umfassend einen feststehenden Teil (11), in dem eine Öffnung definiert ist, und mindestens ein bewegliches Schiebepaneel (12), das entlang zweier Führungsschienen (114, 115), die auf einer Seite des feststehenden Paneels (11) montiert sind, zwischen einer Schließposition, welche die Öffnung in einer ersten Ebene, die von dem feststehenden Paneel (11) definiert wird, Verschlussebene genannt, verschließt, und mindestens einer Öffnungsposition in einer zweiten Ebene, Gleitebene genannt, im Wesentlichen parallel zur Verschlussebene, geführt wird,
wobei jede der Führungsschienen (114, 115) mindestens einen Transportschlitten (2, 3) trägt, der in der Schiene (114, 115) verschieblich geführt ist, wobei jeder Transportschlitten (2, 3) zwei Führungsbahnen (21, 22, 31, 32) oder zwei feststehende Zapfen (123, 124) umfasst, die imstande sind, jeweils mit zwei feststehenden Zapfen (123, 124) oder zwei Führungsbahnen (21, 22, 31, 32), die von dem beweglichen Paneel (12) getragen werden, zusammenzuwirken,
wobei die Vorrichtung zum Verschließen (1) weiter Betätigungsmittel (13) umfasst, die auf die Transportschlitten (3) wirken, um für eine Verschiebebewegung dieser letzteren in den Führungsschienen (114, 115), und den Übergang des beweglichen Paneels (12) von der Verschlussposition in die mindestens eine Gleitposition und umgekehrt zu sorgen,
wobei die Vorrichtung zum Verschließen (1) weiter Mittel zum Synchronisieren (41, 42) der Bewegung der Transportschlitten (2, 3) umfasst, die zwei Synchronisierungselemente (41, 42) umfassen,
**dadurch gekennzeichnet, dass** jedes Ende der Synchronisierungselemente (41, 42) mit einem der Transportschlitten (2, 3) verbunden ist, ein Ende eines der Synchronisierungselemente (41, 42) mit dem Transportschlitten (3) verbunden ist, auf den die Betätigungsmittel (13) anhand von Spannmitteln (52) der Synchronisierungselemente (41, 42) wirken, und dadurch, dass sie weiter mindestens einen Halte-Clip (40) des beweglichen Paneels (12) in offener Position umfasst, der in mindestens einer der Bahnen (21, 22, 31, 32) der Transportschlitten (2, 3) angeordnet ist.

3. Vorrichtung zum Verschließen (1) nach Anspruch 2, **dadurch gekennzeichnet, dass** sich die Spannmittel (52) der Synchronisierungselemente (41, 42) in Form einer Spielauffangfeder (52) darstellen.

4. Vorrichtung zum Verschließen (1) nach einem der Ansprüche 1 bis 3, **dadurch gekennzeichnet, dass** die Haltefeder (51) und die Spielauffangfeder (52) Zugfedern sind.

5. Vorrichtung zum Verschließen (1) nach einem der Ansprüche 1 bis 4, **dadurch gekennzeichnet, dass** jedes der Synchronisierungselemente (41, 42) in einem Teil des Rahmens (121) des beweglichen Paneels (12) aufgenommen ist.

6. Vorrichtung zum Verschließen (1) nach einem der Ansprüche 1 bis 5, **dadurch gekennzeichnet, dass** sich ein erster der Transportschlitten (2, 3) in einer ersten Richtung bewegt, und sich ein zweiter der Transportschlitten (2, 3) in mindestens einer Phase des Schließens und/oder Öffnens des beweglichen Paneels (12) in entgegengesetzter Richtung bewegt.

7. Vorrichtung zum Verschließen (1) nach Anspruch 6, **dadurch gekennzeichnet, dass** die Bewegung in einer ersten Richtung des ersten der Transportschlitten (3) für eine in Bezug auf die Schienen (114, 115) querlaufende Bewegung eines ersten Teils des beweglichen Paneels (12) sorgt, und die Bewegung in der entgegengesetzten Richtung, danach in derselben Richtung des zweiten der Transportschlitten (2) für die in Bezug auf die Schienen (114, 115) querlaufende Bewegung des anderen Teils des beweglichen Paneels (12) sorgt, wodurch der Übergang des beweglichen Paneels (12) in eine Entfernungszwischenposition in der Gleitebene gegenüber der Öffnung, und von dieser entfernt, ermöglicht.

8. Vorrichtung zum Verschließen (1) nach einem der Ansprüche 1 bis 7, **dadurch gekennzeichnet, dass** die Betätigungsmittel (13) ein motorisiertes Antriebskabel umfassen, das auf einen der Transportschlitten (2, 3) wirkt.

9. Vorrichtung zum Verschließen (1) nach einem der Ansprüche 1 bis 8, **dadurch gekennzeichnet, dass** nur eine der Führungsschienen (114, 115) Einkerbungen (117a, 117b) zur Aufnahme der feststehenden Zapfen (123, 124) in der Verschließposition des beweglichen Paneels (12) umfasst.

10. Vorrichtung zum Verschließen (1) nach einem der Ansprüche 1 bis 9, **dadurch gekennzeichnet, dass** einer der Transportschlitten (2, 3) eine Gabel (34) umfasst, die sich in der Nähe eines Endes der Haltefeder (5) oder der Spielauffangfeder (52) befindet und konfiguriert ist, um sich beim Bewegen des beweglichen Paneels (12) von der geschlossenen Position in eine der Gleitpositionen an diese letztere anzulegen.

11. Vorrichtung zum Verschließen (1) nach Anspruch 10, **dadurch gekennzeichnet, dass** die Gabel (34) weiter ein Führungsmittel für eines der Synchronisierungselemente (41) darstellt.

## Claims

1. Device for closing off (1) a bay made in a structure, comprising a fixed portion (11), in which an aperture is defined, and at least one slidably movable panel (12) which is guided along two guide rails (114, 115) mounted on one face of said fixed panel (11), between a closed position, sealing said aperture, in a first plane defined by said fixed panel (11), called sealing plane, and at least one opening position, in a second plane, called sliding plane, substantially parallel to said sealing plane,
each of said guide rails (114, 115) carrying at least one shuttle (2, 3) which is guided in translation in said rail (114, 115), each shuttle (2, 3) comprising two guide tracks (21, 22, 31, 32) or two fixed pins (123, 124) capable of cooperating respectively with two fixed pins (123, 124) or two guide tracks (21, 22, 31, 32) carried by said movable panel (12),
said device for closing off (1) further comprising actuating means (13) acting on one of said shuttles (3) to ensure a translational displacement of the latter in said guide rails (114, 115), and the passage of the movable panel (12) from said sealing position to said at least one sliding position, and vice versa,
said device for closing off (1) further comprising means (41, 42) for synchronising the displacement of said shuttles (2, 3), comprising two synchronisation elements (41, 42),
**characterised in that** one end of one of said synchronisation elements (41, 42) is connected to the frame (121) of said movable panel (12) via a spring (51) for holding the movable panel (12) in the opening position, the other ends of said synchronisation elements (41, 42) being connected to one of said shuttles (2, 3).

2. Device for closing off (1) a bay made in a structure, comprising a fixed portion (11), in which an aperture is defined, and at least one slidably movable panel (12) which is guided along two guide rails (114, 115) mounted on one face of said fixed panel (11), between a closed position, sealing said aperture, in a first plane defined by said fixed panel (11), called sealing plane, and at least one opening position, in a second plane, called sliding plane, substantially parallel to said sealing plane,
each of said guide rails (114, 115) carrying at least one shuttle (2, 3) which is guided in translation in said rail (114, 115), each shuttle (2, 3) comprising two guide tracks (21, 22, 31, 32) or two fixed pins (123, 124) capable of cooperating respectively with two fixed pins (123, 124) or two guide tracks (21, 22, 31, 32) carried by said movable panel (12),
said device for closing off (1) further comprising actuating means (13) acting on one of said shuttles (3) to ensure a translational displacement of the latter in said guide rails (114, 115), and the passage of the movable panel (12) from said sealing position to said at least one sliding position, and vice versa,
said device for closing off (1) further comprising means (41, 42) for synchronising the displacement of said shuttles (2, 3), comprising two synchronisation elements (41, 42),
**characterised in that** each end of the synchronisation elements (41, 42) is connected to one of said shuttles (2, 3), one end of one of said synchronisation elements (41, 42) being connected to the shuttle (3) on which the actuation means (13) acts via means (52) for tensioning said synchronisation elements (41, 42), and **in that** it further comprises at least one clip (40) for holding the movable panel (12) in the opening position disposed in at least one of said tracks (21, 22, 31, 32) of said shuttles (2, 3).

3. Device for closing off (1) according to claim 2, **characterised in that** said means (52) for tensioning said synchronisation elements (41, 42) are in the form of a backlash eliminating spring (52).

4. Device for closing off (1) according to one of claims 1 to 3, **characterised in that** said holding spring (51) and said backlash eliminating spring (52) are tension springs.

5. Device for closing off (1) according to one of claims 1 to 4, **characterised in that** each of the synchronisation elements (41, 42) is housed in a portion of the frame (121) of the movable panel (12).

6. Device for closing off (1) according to one of claims 1 to 5, **characterised in that** a first of said shuttles (2, 3) is displaced in a first direction and a second of said shuttles (2, 3) is displaced in the opposite direction during at least one phase of the closing and/or opening of the movable panel 12.

7. Device for closing off (1) according to claim 6, **characterised in that** the displacement in a first direction of said first of said shuttles (3) ensures the transverse displacement relative to said rails (114, 115) of a first portion of the movable panel (12), and the displacement, in the opposite direction then in the same direction, of said second of said shuttles (2) ensures the transverse displacement relative to said rails (114, 115) of the other portion of the movable panel (12), allowing the passage of the movable panel (12) in an intermediate release position, in the sliding plane, facing the opening and released therefrom.

8. Device for closing off (1) according to one of claims 1 to 7 **characterised in that** said actuating means (13) comprise a motorised drive cable acting on one of said shuttles (2, 3).

9. Device for closing off (1) according to one of claims 1 to 8, **characterised in that** only one of said guide rails (114, 115) comprises notches (117a, 117b) for receiving said pins (123, 124) which are fixed in the sealing position of the movable panel (12).

10. Device for closing off (1) according to one of claims 1 to 9, **characterised in that** one of said shuttles (2, 3) comprises a fork (34) located in the vicinity of one end of said holding spring (5) or said backlash eliminating spring (52) and configured to bear on the latter during the displacement of the movable panel (12) from the closed position to one of said sliding positions.

11. Device for closing off (1) according to claim 10, **characterised in that** said fork (34) further constitutes a means for guiding one of the synchronisation elements (41).
